# EUROPEAN PATENT APPLICATION

(11) **EP 4 066 639 A1**
(43) Date of publication of application: **05.10.2022**
(21) Application number: 21195553.9
(22) Date of filing: 08.09.2021
(51) Int. Cl.: A01N 25/04, A01N 25/10, A01N 25/30, A01N 57/20, A01P 13/00, A01N 37/22, A01N 41/10

(54) **STABLE EMULSIONS**

(30) Priority: 31.03.2021 EP 21166160
(71) Applicant: Adama Agan Ltd., 7710001 Ashdod (IL)
(72) Inventor: HEVRONI, Liron, 8502500 Meitar (IL); SILBERT, Gilad, 7917500 Kibutz Dorot (IL); MOCATTA, David, 7044651 Gedera (IL); GUBRIY, Vladimir, 7745510 Ashdod (IL)
(74) Representative: Modiano, Gabriella Diana

(57) **Abstract**

An oil-in-water agrochemical suspoemulsion comprising (i) an aqueous phase; (ii) a liquid organic phase emulsified in the aqueous phase, which comprises at least one lipophilic active ingredient; (iii) at least 5 w/w%, with respect to the total weight of the final emulsion, of salts; (iv) a thickener; (v) a combination of surfactants comprising a polyanionic block copolymer surfactant and a second surfactant; and a (vi) solid active ingredient. The invention is further directed to tank mixes and methods for the control of undesired plants, pests or diseases. The invention is also directed to an emulsion for preparing said suspoemulsion.

## Description

### FIELD OF THE INVENTION

The present invention belongs to the field of agrochemistry. It is directed to a stable emulsion and a stable suspoemulsion for agricultural applications, to processes for their preparation and to methods for controlling weeds, diseases and pests in plants.

### BACKGROUND

Emulsions are an important type of formulation in agrochemistry. They are versatile formulations that can carry both, water-soluble and water-insoluble components. Creating stable emulsions is challenging. The emulsion must be stable during the emulsification process, during storage, as well as stable when tank mixing. A common problem involves the so called "salting out" of one of the components when seeking high electrolyte loads in the aqueous phase. Salting out takes place in solutions having high ionic strengths, wherein the components having the least solubility precipitates from the aqueous phase. An additional problem emerges because salts reduce the repulsion between the emulsion droplets, which then coalescence and cause the oil phase to separate. This problem imposes a limitation to the concentration of salts (electrolytes), for example active ingredients in the form of electrolytes, and must be accounted for when designing high load formulation.

WO2017/098325 discloses polyanionic polymers and their use for stabilizing lipophilic active ingredients in aqueous dispersions, as well as agricultural compositions comprising the said polyanionic surfactants. The polyanionic surfactants disclosed in WO2017/098325 comprise an anchoring moiety (hydrophobic) and a stabilizing moiety (hydrophilic), the later typically made of anionic sulphate monomers, wherein each moiety can be an homopolymer or a copolymer. On page 18, WO2017/098325 mentions the use of additional common components in agrochemical formulations, such as, preservatives, rheology modifiers, anti-settling agents, antifoam agents, buffers, and liquid diluents, or surfactants such as ionic, anionic, nonionic, polymeric/copolymeric, or non-polymeric/copolymeric surfactants. According to WO2017/098325, the compositions using the polyanionic polymers can be an emulsion, a suspension, a suspension concentrate, a capsule suspension, or a suspo-emulsion. Although the polyanionic surfactants disclosed in WO2017/098325 are mentioned to increase the stability of agrochemical compositions in high salt environments, further improvements are always desirable.

Suspoemulsions can be manufactured by first preparing separately a concentrated oil-in-water emulsion (EW) formulation and a suspension concentrate (SC) formulation, and then combining them. Creating stable emulsions that additionally contain at least one solid active ingredient, that is, suspo-emulsions (or suspoemulsions), presents significant challenges to the formulation chemist. These challenges increase the greater the number and complexity of the components, and the formulation chemist must avoid many potential problems. Some of these problems are aggregation of the solid particles, crystal growth or coalescence of the emulsion droplets, mainly due to Ostwald ripening, or heteroflocculation.

### SUMMARY OF THE INVENTION

The inventors have developed an emulsion (EW) formulation that is even more stable than those resulting from the use of only the polyanionic block copolymer surfactants as disclosed in WO2017/098325.

A first aspect is an oil-in-water agrochemical emulsion comprising
(i) an aqueous phase, for example, between 10 and 90 w/w%, with respect to the total weight of the final emulsion;
(ii) a liquid organic phase emulsified in the aqueous phase, the liquid organic phase comprising at least one lipophilic active ingredient and, optionally, a lipophilic organic solvent;
(iii) at least 5 w/w%, with respect to the total weight of the final emulsion, of salts;
(iv) a thickener; and
(v) a combination of surfactants comprising
   - between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant; and
   - between 0.1 and 15 w/w%, with respect to the total weight of the final emulsion, of a second surfactant, typically lipophilic, selected from polyalcoxylated alcohols selected from the group consisting of esters of polyalkoxylated polyols, polyalkoxylated polyols, and polyalkoxylated C₄-C₃₀ aliphaitic alcohols; and
aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates.

The emulsions of the invention are surprisingly stable, even when the ionic strength of the aqueous phase in the formulation is high, allowing high loads of salts. As a result, emulsions disclosed herein can load high concentrations of hydrophilic active ingredient electrolytes and other salts (for example, fertilizers). The interaction between different components of a formulation can be difficult to predict, and finding the right combination of surfactants in a formulation can be challenging. The inventors have discovered that the combined use of specific surfactants (second surfactants) with polyanionic block copolymer surfactants, typically one as disclosed in WO2017/098325, provides surprisingly stable emulsion formulations (EW), even in the presence of high concentrations of salts in the water phase. The formulation is also stable when diluting in water prior to application in the field (tank mixes). It is therefore a further aspect in the present document a diluted aqueous tank mix comprising an adjuvant and the emulsion of the invention.

A further aspect of the invention is directed to the process for preparing the emulsion of the invention comprising:
(i) emulsifying an organic phase comprising at least one lipophilic active ingredient, optionally a lipophilic organic solvent, and between 0.1 and 15 w/w%, with respect to the total weight of the final emulsion, of a second surfactant selected from
   polyalcoxylated alcohols selected from the group consisting of polyalkoxylated polyols or esters thereof, and polyalkoxylated C₄-C₃₀ aliphaitic alcohols; and aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates;
   into an aqueous phase comprising water and between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant, the aqueous phase optionally comprising less than 5 w/w%, with respect to the total weight of the final emulsion, of salts;
(ii) optionally, mixing the previously obtained emulsion with a first amount of thickener;
(iii) mixing the emulsion obtained in the previous step with an amount of salts up to a minimum of 5 w/w%, with respect to the total weight of the final emulsion;
(iv) mixing the emulsion obtained in the previous step with a thickener.

Thus, rather than preparing a pre-mix of each phase containing all the components, followed by emulsification, in the process disclosed herein part or all the salts are added after the emulsification step. The inventors have observed that the emulsion formulations obtained in this way are surprisingly more stable.

The emulsions obtainable following the above process have displayed an excellent stability and are also an aspect of the present invention.

It is a further aspect of the invention the use of the emulsion of the invention for the control of undesired plants, pests or diseases. It is also a further aspect a method for the control of undesired plants, pests or diseases comprising contacting an effective amount of the emulsion of the invention or a tank mix thereof with the locus of said undesired plants, pests or diseases.

The emulsions of the invention are useful for preparing stable suspoemulsions, and thus it is a further aspect of the invention a suspoemulsion obtained from mixing the emulsion of the invention with an SC formulation.

Thus, a further aspect of the invention is a suspoemulsion formulation comprising
(i) an aqueous phase;
(ii) a liquid organic phase emulsified in the aqueous phase, the liquid organic phase comprising at least one lipophilic active ingredient and, optionally, a lipophilic organic solvent;
(iii) at least 5 w/w%, with respect to the total weight of the final emulsion, of salts;
(iv) a thickener; and
(v) a combination of surfactants comprising
   - between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant;
   - between 0.1 and 15 w/w%, with respect to the total weight of the final emulsion, of a second surfactant selected from
      polyalcoxylated alcohols selected from the group consisting of esters of polyalkoxylated polyols, polyalkoxylated polyols, and polyalkoxylated C₄-C₃₀ aliphatic alcohols; and
      aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates;
   and
(vi) a solid active ingredient.

Further aspects of the invention are:
- an aqueous tank mix comprising an adjuvant and the suspoemulsion of the invention.
- a method for the preparation of the suspoemulsion of the invention comprising mixing an aqueous suspension concentrate (SC formulation) and the emulsion of the invention.
- a method for the control of undesired plants, pests or diseases comprising contacting an effective amount of the suspoemulsion of the invention or a tank thereof with the locus of said undesired plants, pests or diseases.

### DETAILED DESCRIPTION OF THE INVENTION

### Definitions

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the term "stable" when used in connection with physical stabilization or when used in connection with a composition means that no significant crystallization, sedimentation and/or thickening was observed, and always within acceptable limits for the normal use intended for the formulation for example, a formulation is considered physically stable if no significant crystallization, phase separation and/or thickening was observed after 1 day, for example, after 4 days or after 2 weeks of storage at a temperature of at least 54°C.

As used herein, the term "effective amount" when used in connection with an active ingredient or a formulation containing it refers to an amount of the active ingredient that, when ingested, contacted with or sensed, is sufficient to achieve a good level of control or activity of a pest, disease and/or unwanted plant.

An "active ingredient" is a substance capable of controlling unwanted plants (weeds), plant pests or plant diseases, and does not cause significant damage to the treated crop plants. The term "active ingredient" comprises, but is not limited to insecticides, nematicides, herbicides, fungicides, algicides, animal repellents or acaricides. Active ingredients are not limited to pesticides, and also include for example hormones, bio-stimulants, and plant growth regulators.

A hydrophilic active ingredient electrolyte can be an acidic salt, an alkali salt or a Zwitterion. The salt of the active ingredient can be the result of the neutralization reaction between an acidic group of the active ingredient and a base or vice versa, the neutralization reaction between a basic group of the active ingredient and an acid. Also, depending on the pH of the aqueous phase of the emulsion, the active ingredient electrolyte can be the result of the dissociation reaction of an acidic or basic group in water.

As used herein, the term "high salt environment" means that the emulsion formulation (or the suspoemulsion thereof) contains at least 5 w/w% of salt relative to the total weight of the final emulsion formulation. For example, at least 7 w/w%, preferably at least 10 w/w%, more preferably at least 15 w/w%, even more preferably at least 18 w/w%, with respect to the total weight of the final emulsion, of salts. The formulations described herein can have a salt molar concentration of at least 0.5 M, for example, above 0.6 M or above 0.7 M.

As used herein the term "plant" or "crop" or "crop plants" includes reference to whole plants, plant organs (e.g. leaves, stems, twigs, roots, trunks, limbs, shoots, fruits etc.), plant cells, or plant seeds, which have industrial interest, including grasslands and pastures, such as for example plants destined to human consumption, animal consumption or other industrial uses. This term also encompasses crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil. As used herein, the term "crop" includes plants which have been modified by breeding, mutagenesis or genetic engineering. Genetically modified plants are plants in which their genetic material has been modified by the use of recombinant DNA techniques. Typically, one or more genes have been integrated into the genetic material of such a plant in order to improve certain properties of the plant.

As used herein, the term "locus" includes a habitat, breeding ground, plant, propagation material, soil, area, material or environment in which an undesired plants, pest or disease is growing or may grow.

As used herein, the terms "control" or "controlling" or "combatting" refers to preventing disease, pests or the growth of unwanted plants, protecting plants from diseases or pests, delaying the onset of disease, and killing, or to reducing the deleterious effects of the disease, or pests, or to killing or to reducing growth of unwanted plants.

The emulsions of the invention (or the suspoemulsion thereof) may additionally comprise agriculturally acceptable inert additives. These are defined herein as any substance that itself is not an active ingredient but is added to the composition to improve its properties.

The emulsions of the invention (or the suspoemulsion thereof) can be mixed with tank adjuvant solutions prior to their application in the field to improve physical properties and efficacy. Some substances can be used as agriculturally acceptable inert additives in the emulsion of the invention or mixed as tank additives with the emulsion of the invention prior to application in the field. The tank mixes resulting from mixing the emulsions of the invention (or the suspoemulsion thereof) with one or more tank adjuvant solutions are also an aspect of the present invention.

Non-limiting examples of agriculturally acceptable inert additives and of tank adjuvants are wetting agents (or spreaders), stickers, emulsifiers, dispersants, suspending agents, plant penetrants (or translocators), antifreeze agents, preservative agents, binders, fertilizers, thickeners, anti-oxidation agents, drift retardants, buffers, inverting agents, soil penetrants, UV absorbers, protectant binders, anti-foaming agents or humectants. Preferably, the tank mix comprises at least fertilizers.

The term "lipophilic" or "hydrophobic" refers to having affinity to organic solvents, and which therefore do not dissolve in water or do so in negligible amounts.

The term "hydrophilic" or "lipophobic" refers to species having affinity to water, and which therefore do not dissolve in organic solvents or do so in negligible amounts. For example, lipophilic active ingredients have a solubility of less than 1 g/L in water at 20°C.

"Alkyl" means in the present document a straight or branched hydrocarbon chain radical consisting of carbon and hydrogen atoms, containing no unsaturation, having the number of carbon atoms indicated in each case, for example 1-16 carbon atoms (C₁-C₁₆-), which is attached to the rest of the molecule through a single bond. For example, an alkyl group comprises 1-8 carbon atoms, typically 1-4 carbon atoms. Exemplary alkyl groups can be methyl, ethyl, n-propyl, i-propyl, n-butyl, t-butyl, or n-pentyl.

"Aryl" means in the present document an aromatic hydrocarbon radical having the number of carbon atoms indicated in each case, for example 1-16 carbon atoms (C₁-C₁₆-), which is attached to the rest of the molecule through a single bond, such as phenyl or naphthyl.

"Aryl alkyl" means in the present document an aryl group linked to the rest of the molecule through an alkyl group such as benzyl and phenethyl.

"Alkyl aryl" means in the present document an alkyl group linked to the rest of the molecule through an aryl group.

Alky, aryl, aryl alkyl and alkyl aryl groups are unsubstituted unless otherwise indicated.

The term "a" or "an" as used herein includes the singular and the plural, unless specifically stated otherwise. Therefore, the terms "a," "an" or "at least one" can be used interchangeably in this application.

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes ±10% from the indicated values in the range. In addition, the endpoints of all ranges directed to the same component or property herein are inclusive of the endpoints, are independently combinable, and include all intermediate points and ranges.

As used herein, the phrase "block copolymer" means a polymer comprising at least two different polymers combined by a covalent bond. Each of the blocks is usually a homopolymer but can also be a copolymer with a specific distinct physical/chemical or functional characteristic (e.g., having one block that is easily soluble in water, with the other block being primarily insoluble in water). Therefore, the polyanionic block copolymer surfactant comprises a "hydrophilic moiety" and a "lipophilic moiety". Each of these moieties can be homopolymers or block copolymers themselves.

### Emulsions

For the purposes of the present invention it is understood that an emulsion is a formulation comprising an aqueous continuous phase which contains emulsified oily droplets, that is, an oil-in-water emulsion. In the emulsions of the invention the aqueous phase may also comprise an active ingredient electrolyte. The oil droplets forming the organic phase comprise an agrochemical lipophilic active ingredient, that is preferably liquid at room temperature.

Oil-in-water emulsions are typically prepared by first preparing the corresponding solution of the aqueous phase and the oil phase and then combining them in such a way that the lipophilic phase forms droplets in the continuous aqueous phase. In the present emulsions the amount of water is not particularly relevant, and it is typically comprised between 5 and 90 w/w% with respect to the total weight of the final emulsion, for example, between 10 and 80 w/w%, or between 15 and 60 w/w%, between 20 and 50 w/w%. The total amount of aqueous phase is typically comprised between 25 and 90 w/w%, with respect to the total weight of the final emulsion, for example, between 35 and 80 w/w%, preferably between 40 and 70 w/w%.

Additionally, the organic phase may comprise a water insoluble organic solvent, if needed to improve the solubility of any of the components in the liquid organic phase. If an organic solvent is used, it can be selected from the group consisting of lactic acid alkyl esters, aromatic naphtha solvents, aromatic or aliphatic ketones, alkyl amides, and pyrrolidones (such as n-octyl pyrrolidone). For example, the solvent can be selected from the group consisting of ethyl acetate, n-butyl acetate, sec-butyl acetate, isobutyl acetate, propyl acetate, amyl acetate toluene, a xylene, limonene, hexane, pentane, heptane, cyclohexane and mixtures thereof. The solvent must be effective in solubilizing the lipophilic active ingredient and preferably environmentally friendly.

The lipophilic active ingredient in the emulsion or suspoemulsion thereof can be an insecticide, a fungicide or an herbicide, other active ingredients as described elsewhere in the present document.

Exemplary lipophilic insecticides can be selected from the group consisting of benzofuranyl methylcarbamate insecticides such as benfuracarb, and carbosulfan; oxime carbamate insecticides such as aldicarb; fumigant insecticides such as chloropicrin, 1,3-dichloropropene and methyl bromide; juvenile hormone mimics such as fenoxycarb; organophosphate insecticides such as dichlorvos; aliphatic organothiophosphate insecticides such as malathion and terbufos; aliphatic amide organothiophosphate insecticides such as dimethoate; benzotriazine organothiophosphate insecticides such as azinphos-ethyl and azinphos-methyl; pyridine organothiophosphate insecticides such as chlorpyrifos and chlorpyrifos-methyl; pyrimidine organothiophosphate insecticides such as Diazinon; phenyl organothiophosphate insecticides such as parathion and parathion-methyl; pyrethroid ester insecticides such as bifenthrin, cyfluthrin, beta-cyfluthrin, cyhalothrin, gamma-cyhalothrin, lambda-cyhalothrin, zeta-cypermethrin, alpha-cypermethrin, beta-cypermethrin, fenvalerate, and permethrin, and mixtures thereof.

Exemplary lipophilic fungicides in the emulsion or suspoemulsion thereof can be selected from the group consisting of Aldimorph, Dinocap, Edifenphos, Etridiazole, Fenpropimorph, Iprobenfos, Meptyldinocap, Metalaxyl-M, Propiconazole, tributyltin oxide, and mixtures thereof.

Exemplary lipophilic herbicides for the emulsion or suspoemulsion thereof can be selected from the group consisting of amide herbicides such as dimethenamid and dimethenamid-P; anilide herbicides such as propanil; benzoic acid herbicides such as dicamba; chloroacetanilide herbicides such as acetochlor, alachlor, butachlor, metolachlor and S-metolachlor; cyclohexene oxime herbicides such as sethoxydim; dinitroaniline herbicides such as benfluralin, ethalfluralin, pendimethalin, and trifluralin; nitrile herbicides such as bromoxynil octanoate; phenoxyacetic herbicides such as 4-CPA, 2,4-D, 3,4-DA, MCPA, and MCPA-thioethyl; phenoxybutyric herbicides such as 4-CPB, 2,4-DB, 3,4-DB, and MCPB; phenoxypropionic herbicides such as cloprop, 4-CPP, dichlorprop, dichlorprop-P, 3,4-DP, fenoprop, mecoprop and mecoprop-P; aryloxyphenoxypropionic herbicides such as cyhalofop, fluazifop, fluazifop-P, haloxyfop, haloxyfop-R; pyridine herbicides such as aminopyralid, clopyralid, picloram, and triclopyr; and triazole herbicides such as carfentrazone ethyl, and mixtures thereof.

For example, the lipophilic active ingredient is an herbicide selected from the group consisting of atrazine, bromoxynil, desmedipham, diflufenican, dimethenamid-P, diuron, fomesafen, ioxynil, isoproturon, isoxaben, linuron, S-metolachlor, oryzalin, oxyfluorfen, phenmedipham, prometryn, propyzamide, penoxsulam, pyroxsulam, quinclorac, simazine, terbuthylazine, terbutryn, tralkoxydim, flumioxazin, flumetsulam, metosulam, diclosulam, cloransulam-methyl, and mixtures thereof.

Typical examples of lipophilic active ingredients useful in the emulsions disclosed herein are chloroacetamides, for example, one selected from the group consisting of acetochlor, alachlor, amidochlor, butachlor, butenachlor, delachlor, diethatyl, dimethachlor, ethachlor, ethaprochlor, metazachlor, metolachlor, S-metolachlor, pretilachlor, propachlor, propisochlor, prynachlor, terbuchlor, thenylchlor, xylachlor. More preferably, the lipophilic active ingredient is an herbicide selected from the group consisting dimethenamid-P, S-metolachlor, and mixtures thereof.

The hydrophilic active ingredient electrolyte for the emulsion or suspoemulsion thereof can be a water-soluble insecticide, fungicide or herbicide electrolyte, i.e. a salt of an active ingredient. As mentioned before, hydrophilic active ingredients refer in the present document to those having a solubility in ionized water at 20°C of more than 1 g/L. Active ingredient electrolytes used in the present invention are typically salts that are dissociated in water, providing very high solubilities, for example, more than 10 g/L in ionized water at 20°C, preferably more than 30 g/L, preferably more than 50 g/L. Therefore, the emulsions described herein may comprise salts of any active ingredient capable of forming salts of acids or salts of bases.

It is preferred that the hydrophilic active ingredient electrolyte is one selected from the group consisting of salts of organophosphorus herbicides, for example, one selected from the group consisting of salts of amiprofos-methyl, amiprophos, anilofos, bensulide, bilanafos, butamifos, clacyfos, 2,4-DEP, DMPA, EBEP, fosamine, glufosinate, glufosinate-P, glyphosate, huangcaoling, piperophos, and shuangjiaancaolin.

It is preferred that the lipophilic active ingredient is selected from the group consisting of amide herbicides, preferably a chloroacetanilide herbicide, preferably one selected from the group consisting of allidochlor, amicarbazone, beflubutamid, beflubutamid-M, benzadox, benzipram, bromobutide, cafenstrole, CDEA, cyprazole, dimethenamid, dimethenamid-P, diphenamid, epronaz, etnipromid, fentrazamide, flucarbazone, flupoxam, fomesafen, halosafen, huangcaoling, isocarbamid, isoxaben, napropamide, napropamide-M, naptalam, pethoxamid, propyzamide, quinonamid, saflufenacil, tebutam, tiafenacil, triazofenamide, chloranocryl, cisanilide, clomeprop, cypromid, diflufenican, erlujixiancaoan, etobenzanid, fenasulam, flufenacet, flufenican, ipfencarbazone, mefenacet, mefluidide, metamifop, monalide, naproanilide, pentanochlor, picolinafen, propanil, sulfentrazone, tetflupyrolimet, benzoylprop, flamprop, flamprop-M, acetochlor, alachlor, amidochlor, butachlor, butenachlor, delachlor, diethatyl, dimethachlor, ethachlor, ethaprochlor, metazachlor, metolachlor, S-metolachlor, pretilachlor, propachlor, propisochlor, prynachlor, terbuchlor, thenylchlor, xylachlor, benzofluor, cloransulam, diclosulam, dimesulfazet, florasulam, flumetsulam, metosulam, perfluidone, profluazol, pyrimisulfan, triafamone, asulam, carbasulam, fenasulam, oryzalin, penoxsulam, pyroxsulam, see also sulfonylurea herbicides, bencarbazone, and chlorthiamid.

Exemplary hydrophilic insecticide electrolytes can be a salt of an insecticide selected from the group consisting of arsenical insecticides, botanical insecticides, carbamate insecticides, diamide insecticides, dinitrophenol insecticides, fluorine insecticides, formamidine insecticides, fumigant insecticides, inorganic insecticides, insect growth regulators, isoxazoline insecticides, macrocyclic lactone insecticides, neonicotinoid insecticides, nereistoxin analogue insecticides, organochlorine insecticides, organophosphorus insecticides, oxadiazine insecticides, oxadiazolone insecticides, phthalimide insecticides, physical insecticides, pyrazole insecticides, pyrethroid insecticides, pyrimidinamine insecticides, pyrrole insecticides, quaternary ammonium insecticides, sulfoximine insecticides, tetramic acid insecticides, tetronic acid insecticides, thiazole insecticides, thiazolidine insecticides, thiourea insecticides, urea insecticides, and zwitterionic insecticides.

Exemplary hydrophilic insecticide electrolytes can be a salt of an insecticide selected from the group consisting of (E)-2-(2-(2-(2,3-dichlorophenylamino)-6-trifluoromethylpyrimidin-4-yloxymethyl)phenyl)-3-methoxyacrylate, 1-(4-chlorophenyl)-3-(2,6-dichlorobenzoyl)urea, 1,2-dibromoethane, 1,2-dichloropropane, 2-(octylthio)ethanol, 2-imidazolidone, Acephate, Acetamiprid, Acethion, Acetophos, Acetoprole, Acibenzolar-S-methyl, Acrinathrin, Acrylonitrile, Acynonapyr, Afidopyropen, Alanycarb, Aldicarb, Aldicarb sulfone, Aldrin, Allethrin, Allyxycarb, Alpha-cypermethrin, Alpha-endosulfan, Alpha-hexachlorocyclohexane, Aluminium phosphide, Aluminium silicate, Amidithion, Amidoflumet, Amidothioate, Aminocarb, Amiton, Amitraz, Ammonium acetate, Anthracene oil, Aramite, Arsenic acid, Aspon, Athidathion, Azamethiphos, Azinphos-ethyl, Azinphos-methyl, Azothoate, Azoxybenzene, Benclothiaz, Bendiocarb, Benfuracarb, Bensultap, Benzoic acid, Benzpyrimoxan, Benzyl benzoate, Beta-cyfluthrin, Beta-cypermethrin, Beta-endosulfan, Bifenazate, Bifenthrin, Binapacryl, Bioallethrin, Biopermethrin, Bioresmethrin, Bis(2-chloroethyl)ether, Bistrifluron, Boric acid, Broflanilide, Brofluthrinate, Bromfenvinfos, Bromocyclen, Bromomethane, Bromophos, Bromophos-ethyl, Bufencarb, Buprofezin, Butathiofos, Butocarboxim, Butonate, Butopyronoxyl, Butoxycarboxim, Cadusafos, Calcium arsenate, Calcium chloride, Calcium hydroxide, Camphechlor, Caprylic acid potassium salt, Carbanolate, Carbaryl, Carbofuran, Carbon dioxide, Carbon disulphide, Carbon tetrachloride, Carbophenothion, Carbosulfan, Cartap, Cartap hydrochloride, Chinomethionat, Chloramidophos, Chlorantraniliprole, Chlorbenside, Chlorbicyclen, Chlordane, Chlordecone, Chlordimeform, Chlorethoxyfos, Chlorfenapyr, Chlorfenethol, Chlorfenson, Chlorfensulphide, Chlorfenvinphos, Chlorfluazuron, Chlormephos, Chlorobenzilate, Chloropicrin, Chloroprallethrin, Chloropropylate, Chlorphoxim, Chlorprazophos, Chlorpyrifos, Chlorpyrifos-methyl, Chlorthion, Chlorthiophos, Chromafenozide, Cispermethrin, Cloethocarb, Clothianidin, Copper acetoarsenite, Copper naphthenate, Coumithoate, Crotamiton, Cyanophos, Cyanthoate, Cyantraniliprole, Cyclaniliprole, Cyclethrin, Cycloprate, Cycloprothrin, Cyenopyrafen, Cyetpyrafen, Cyflumetofen, Cyfluthrin, Cyhalodiamide, Cyhalothrin, Cyhexatin, Cypermethrin, Cyphenothrin, Cyromazine, DAEP, Dazomet, DCIP, D-D, DDD, DDT, Deltamethrin, Demephion, Demephion-O, Demephion-S, Demeton, Demeton-O-methyl, Demeton-O-methyl sulfone, Demeton-S-methyl, Demeton-S-methyl sulfone, Diafenthiuron, Dialifos, Diamidaphos, Diammonium phosphate, Diazinon, Dibromochloropropane, Dibutyl phthalate, Dichlofenthion, Dichlorvos, Diclocymet, Dicloromezotiaz, Dicrotophos, Dieldrin, Dienochlor, Diethyltoluamide, Diflovidazin, Diflubenzuron, Dimefluthrin, Dimefox, Dimethoate, Dimethrin, Dimethyl disulfide, Dimethyl phthalate, Dimethylvinphos, Dinex, Dinex-diclexine, Dinotefuran, Diofenolan, Dioxabenzophos, Dioxacarb, Dioxathion, Diphenylamine, Disodium octaborate tetrahydrate, Disulfoton, Dixanthogen, DNOC, DNOC ammonium, DNOC potassium, DNOC sodium, Dormant oil, Empenthrin, Endosulfan, Endothion, Endrin, EPN, Epofenonane, Epsilon-metofluthrin, Epsilon-momfluorothrin, Esfenvalerate, Etaphos, Ethiofencarb, Ethion, Ethiprole, Ethoate-methyl, Ethoprophos, Ethylene dichloride, Etofenprox, Etrimfos, Fatty acids (generic), Fenazaflor, Fenazaquin, Fenbutatin oxide, Fenchlorphos, Fenfluthrin, Fenitrothion, Fenobucarb, Fenothiocarb, Fenoxycarb, Fenpirithrin, Fenpropathrin, Fenpyroximate, Fenson, Fensulfothion, Fenthion, Fenthion sulfoxide, Fenvalerate, Fipronil, Flometoquin, Flonicamid, Fluazaindolizine, Flubendiamide, Flucofuron, Flucycloxuron, Flucythrinate, Fluenetil, Flufenerim, Flufenoxuron, Flufenprox, Flufiprole, Fluorbenside, Fluoroacetamide, Flupentiofenox, Flupyradifurone, Fluvalinate, Fluxametamide, Fonofos, Formetanate, Formetanate hydrochloride, Formothion, Formparanate, Fosmethilan, Fospirate, Fosthiazate, Fufenozide, Furathiocarb, Furethrin, Gamma-cyhalothrin, Guadipyr, Halfenprox, Halofenozide, Heptachlor, Heptafluthrin, Heptenophos, Heterophos, Hexachlorocyclohexane, Hexadecanoic acid, Hexaflumuron, Hydramethylnon, Hydroprene, Hyquincarb, Icaridin, Imidacloprid, Imidaclothiz, Imiprothrin, Indoxacarb, lodofenphos, lodomethane, IPSP, Isamidofos, Isazofos, Isobenzan, Isocarbophos, Isocycloseram, Isodrin, Isofenphos, Isofenphos-methyl, Isolan, Isoprocarb, Isothioate, Isoxathion, Kadethrin, Kaolin, Kaolin calcined, Kappa-bifenthrin, Kappa-tefluthrin, Kelevan, Kinoprene, Lambda-cyhalothrin, Lavandulyl senecioate, Lead arsenate, Leptophos, Lime sulphur, Lindane, Lithium perfluorooctane sulfonate, Lufenuron, Lythidathion, Magnesium phosphide, Malathion, Malonoben, Mazidox, M-cumenyl methylcarbamate, Mecarbam, Mecarphon, Menazon, Meperfluthrin, Mephosfolan, Mercurous chloride, Metaflumizone, Metam-potassium, Metam-sodium, Metepa, Methacrifos, Methamidophos, Methidathion, Methiocarb, Methiotepa, Methocrotophos, Methomyl, Methoprene, Methoxychlor, Methoxyfenozide, Methyl isothiocyanate, Metofluthrin, Metolcarb, Metoxadiazone, Mevinphos, Mexacarbate, Mipafox, Mirex, Momfluorothrin, Monocrotophos, Morphothion, Naled, Nanosilver pesticide, Nitenpyram, Nithiazine, Nitrilacarb, N-methylneodecanamide, N-nitrosodimethylamine, Nornicotine, Novaluron, Noviflumuron, O,o'-DDT, O,p'-DDT, Omethoate, Oxamyl, Oxazosulfyl, Oxydemeton-methyl, Oxydeprofos, Oxydisulfoton, P,p'-DDT, Paichongding, Parathion-ethyl, Parathion-methyl, Pentachlorophenol, Permethrin, Perthane, Phenkapton, Phenothrin, Phenthoate, Phorate, Phosalone, Phosfolan, Phosmet, Phosnichlor, Phosphamidon, Phosphine, Phoxim, Piperonyl sulfoxide, Pirimicarb, Pirimiphos-ethyl, Pirimiphos-methyl, Plifenate, Prallethrin, Profenofos, Profluthrin, Promacyl, Promecarb, Propaphos, Propetamphos, Propoxur, Prothidathion, Prothiofos, Prothoate, Protrifenbute, Pyflubumide, Pymetrozine, Pyraclofos, Pyrafluprole, Pyramat, Pyridaben, Pyridafenthion, Pyridalyl, Pyrifluquinazon, Pyriminostrobin, Pyriproxyfen, QRD-460, Quinalphos, Quinothion, Quintiofos, Renofluthrin, Resmethrin, Schradan, Semiamitraz hydrochloride, Silafluofen, Silica, S-methoprene, Sodium tetraborate pentahydrate, Spinetoram, Spirodiclofen, Spiromesifen, Spirotetramat, Strobane, Sulfluramid, Sulfotep, Sulfoxaflor, Sulfuryl fluoride, Sulprofos, Tau-fluvalinate, Tebufenozide, Tebupirimfos, Teflubenzuron, Tefluthrin, Temephos, Terallethrin, Terbufos, Tetrachlorvinphos, Tetradifon, Tetraethyl pyrophosphate, Tetramethrin, Tetramethylfluthrin, Tetraniliprole, Tetrasul, Thiacloprid, Thiamethoxam, Thiapronil, Thiocarboxime, Thiocyclam, Thiocyclam hydrogen oxalate, Thiodicarb, Thiofanox, Thiometon, Thionazin, Thioquinox, Thiosultap, Thiosultap-disodium, Thiosultap-monosodium, Thiourea, Tolfenpyrad, Tralocythrin, Tralomethrin, Transfluthrin, Transpermethrin, Triarathene, Triazamate, Triazophos, Trichlorfon, Trichloronate, Trifenmorph, Trifenofos, Triflumezopyrim, Triflumuron, Trimethacarb, Triprene, Urea, Vamidothion, Verbutin, XMC, Xylylcarb, and Zeta-cypermethrin.

Exemplary hydrophilic fungicide electrolytes can be a salt of a fungicide selected from the group consisting of aliphatic nitrogen fungicides, amide fungicides, antibiotic fungicides, aromatic fungicides, arsenical fungicides, aryl phenyl ketone fungicides, benzimidazole fungicides, benzimidazole precursor fungicides, benzothiazole fungicides, botanical fungicides, bridged diphenyl fungicides, carbamate fungicides, conazole fungicides, copper fungicides, cyanoacrylate fungicides, dicarboximide fungicides, dinitrophenol fungicides, dithiocarbamate fungicides, dithiolane fungicides, fumigant fungicides, hydrazide fungicides, imidazole fungicides, inorganic fungicides, mercury fungicides, morpholine fungicides, organophosphorus fungicides, organotin fungicides, oxathiin fungicides, oxazole fungicides, polysulfide fungicides, pyrazole fungicides, pyridazine fungicides, pyridine fungicides, pyrimidine fungicides, pyrrole fungicides, quaternary ammonium fungicides, quinoline fungicides, quinone fungicides, quinoxaline fungicides, tetrazole fungicides, thiadiazole fungicides, thiazole fungicides, thiazolidine fungicides, thiocarbamate fungicides, thiophene fungicides, triazine fungicides, triazole fungicides, triazolopyrimidine fungicides, urea fungicides, and zinc fungicides.

Exemplary hydrophilic fungicide electrolytes can be a salt of a fungicide selected from the group consisting of (R)-flutriafol, (R)-hexaconazole, (S)-flutriafol, (S)-hexaconazole, 10,10'-oxybisphenoxarsine, 2-(thiocyanomethylthio)benzothiazole, 2,2-dibromo-3-nitrilopropionamide, 2,4,5-trichlorophenol, 2,4-dimethylphenol, 2,5-dichlorobenzoic acid methyl ester, 2,6-dichloro-N-((4-(trifluoromethyl)phenyl)methyl-benzamide, 24-epibrassinolide, 2-allyphenol, 2-aminobutane, 2-methoxyethylmercury acetate, 2-methoxyethylmercury chloride, 2-phenylphenol, 8-hydroxyquinoline, Acibenzolar-S-methyl, Aldimorph, Ametoctradin, Amisulbrom, Ammonium acetate, Ammonium carbonate, Ampropylfos, Anilazine, Anthracene oil, Asomate, Azaconazole, Azithiram, Azoxystrobin, Barium polysulphide, Benalaxyl, Benalaxyl-M, Benodanil, Benomyl, Benquinox, Bentaluron, Benthiavalicarb, Benthiavalicarb isopropyl, Benzalkonium chloride, Benzamacril, Benzamacril isobutyl, Benzamorf, Benzoic acid, Benzovindiflupyr, Bethoxazin, Binapacryl, Biphenyl, Bis(methylmercury) sulphate, Bismerthiazol, Bis-trichloromethyl sulfone, Bitertanol, Bithionol, Bixafen, Bordeaux mixture, Boric acid, Boscalid, Bromuconazole, Bronopol, Bupirimate, Buthiobate, Calcium carbonate, Calcium chloride, Calcium cyanamide, Calcium hydroxide, Calcium phosphate, Captafol, Captan, Carbamorph, Carbendazim, Carboxin, Carpropamid, Chinomethionat, Chlobenthiazone, Chloraniformethan, Chloranil, Chlordecone, Chlorfenazole, Chloroneb, Chlorothalonil, Chloroxylenol, Chlorquinox, Chlozolinate, Cis-propiconazole, Climbazole, Copper (1) oxide, Copper abietate, Copper bis(3-phenylsalicylate), Copper II acetate, Copper II carbonate, Copper II chloride, Copper II hydroxide, Copper naphthenate, Copper oxychloride, Copper sulphate, COS-OGA, Coumethoxystrobin, Coumoxystrobin, Cufraneb, Cuprobam, Cyazofamid, Cycloheximide, Cyflufenamid, Cymoxanil, Cypendazole, Cyproconazole, Cyprodinil, Cyprofuram, Dazomet, D-D, Debacarb, Decafentin, Dehydroacetic acid, Diammonium ethylenebis (dithiocarbamate), Dibromochloropropane, Dichlobentiazox, Dichlofluanid, Dichlone, Dichlorophen, Diclobutrazol, Diclocymet, Diclomezine, Dicloran, Didecyldimethylammonium chloride, Diethofencarb, Difenoconazole, Difenzoquat, Difenzoquat metilsulfate, Diflumetorim, Dimetachlone, Dimethirimol, Dimethomorph, Dimethyl disulfide, Dimoxystrobin, Diniconazole, Diniconazole-M, Dinobuton, Dinocap, Dinocap 4, Dinocap 6, Dinocton, Dinopenton, Dinosulfon, Diphenylamine, Dipymetitrone, Dipyrithione, Disodium octaborate tetrahydrate, Disodium phosphonate, Ditalimfos, Dithianon, DNOC, DNOC ammonium, DNOC potassium, DNOC sodium, Dodemorph, Dodemorph acetate, Dodine, Drazoxolon, Edifenphos, Enoxastrobin, Epoxiconazole, Etaconazole, Etem, Ethaboxam, Ethirimol, Ethoxyquin, Ethylene bisisothiocyanate sulphide, Ethylicin, Ethylmercury bromide, Etridiazole, Famoxadone, Fatty acids (generic), Fenamidone, Fenaminosulf, Fenaminstrobin, Fenapanil, Fenarimol, Fenbuconazole, Fenfuram, Fenhexamid, Fenitropan, Fenoxanil, Fenpiclonil, Fenpicoxamid, Fenpropidin, Fenpropimorph, Fenpyrazamine, Fentin acetate, Fentin chloride, Fentin hydroxide, Ferbam, Florylpicoxamid, Fluazinam, Flubeneteram, Flubenzimine, Fludioxonil, Flufenoxystrobin, Fluindapyr, Flumorph, Fluopicolide, Fluopimomide, Fluopyram, Fluoroimide, Fluotrimazole, Fluoxapiprolin, Fluoxastrobin, Fluquinconazole, Flusilazole, Flusulfamide, Flutianil, Flutolanil, Flutriafol, Fluxapyroxad, Folpet, Formaldehyde, Fosetyl, Fosetyl-aluminium, Fuberidazole, Furalaxyl, Furalaxyl-M, Furametpyr, Furconazole, Furconazole-cis, Furfural, Furmecyclox, Furyloxyfen, Glutaraldehyde, Glyodin, Griseofulvin, Guazatine, Halacrinate, Hexachlorobenzene, Hexachlorophene, Hexaconazole, Hexylthiofos, Huanjunzuo, Hydrogen peroxide, Hymexazol, Imazalil, Imibenconazole, Iminoctadine, Iminoctadine triacetate, Iminoctadine tris(albesilate), Inezin, Ipconazole, Ipfentrifluconazole, Ipflufenoquin, Iprobenfos, Iprodione, Iprovalicarb, Isobutyric acid, Isofetamid, Isoflucypram, Isoprothiolane, Isopyrazam, Isotianil, Izopamfos, Kresoxim-methyl, Lime sulphur, Mancopper, Mancozeb, Mandestrobin, Mandipropamid, Maneb, Mebenil, Mecarbinzid, Mefentrifluconazole, Mepanipyrim, Mepronil, Meptyldinocap, Mercuric oxide, Mercurous chloride, Metalaxyl, Metalaxyl-M, Metam-potassium, Metam-sodium, Metazoxolon, Metconazole, Methasulfocarb, Methfuroxam, Methyl isothiocyanate, Methylarsenic sulphide, Methylene bisthiocyanate, Metiram, Metominostrobin, Metrafenone, Metsulfovax, Metyltetraprole, Mucochloric anhydride, Myclobutanil, Myclozolin, N-(3-chloro-2,6-dimethylphenyl)-2-methoxy-N-(tetrahydr-2-oxo-3-furanyl)acetamide, Nabam, Nickel bis(dimethyldithiocarbamate), Niclosamide, Nitrothal isopropyl, Nuarimol, Octhilinone, Ofurace, Orysastrobin, Oxadixyl, Oxathiapiprolin, Oxazosulfyl, Oxine-copper, Oxpoconazole fumarate, Oxycarboxin, Paclobutrazol, Paraffin oil (CAS No. 72623-86-0), Paraffin oil (CAS No: 64742-46-7), Paraffin oil (CAS No: 97862-82-3), Parinol, Penconazole, Pencycuron, Penflufen, Pentachlorophenol, Penthiopyrad, Peroxyacetic acid, Phenyl mercuric acetate, Phenylmercury chloride, Phenylmercury nitrate, Phosdiphen, Phthalide, Picarbutrazox, Picoxystrobin, Piperalin, Potassium bicarbonate, Potassium iodide, Potassium phosphonates, Potassium thiocyanate, Probenazole, Prochloraz, Procymidone, Propamidine, Propamocarb, Propamocarb hydrochloride, Propiconazole, Propineb, Propionic acid, Proquinazid, Prothiocarb, Prothioconazole, Pydiflumetofen, Pyracarbolid, Pyraclostrobin, Pyrametostrobin, Pyraoxystrobin, Pyrapropoyne, Pyraziflumid, Pyrazophos, Pyribencarb, Pyridachlometyl, Pyridinitril, Pyrifenox, Pyrimethanil, Pyrimorph, Pyriofenone, Pyrisoxazole, Pyroquilone, Quinofumelin, Quinoxyfen, Quintozene, Saisentong, Sedaxane, Silthiofam, Simeconazole, Sodium arsenite, Sodium carbonate, Sodium hydrogen carbonate, Sodium hypochlorite, Sodium tetraborate pentahydrate, Spiropidion, Spiroxamine, Sulfuryl fluoride, Sulphur, Tebuconazole, Tebufloquin, Tecloftalam, Tecnazene, Tetraconazole, Thiabendazole, Thicyofen, Thifluzamide, Thiomersal, Thiophanate, Thiophanate-methyl, Thioquinox, Thiram, Tiadinil, Tolclofos-methyl, Tolfenpyrad, Tolprocarb, Tolylfluanid, Trans-propiconazole, Triadimefon, Triadimenol, Triamiphos, Triazoxide, Tributyltin oxide, Trichlamide, Triclopyricarb, Tricyclazole, Tridemorph, Trifloxystrobin, Triflumizole, Triforine, Trioxymethylene, Triticonazole, Urea, Valifenalate, Vinclozolin, Zarilamid, Zinc borate, Zinc oxide, Zineb, Ziram, and Zoxamide.

Exemplary hydrophilic herbicide electrolytes can be a salt of a herbicide selected from the group consisting of amide herbicides, aromatic acid herbicides, aroylcyclohexanedione herbicides, arsenical herbicides, benzofuranyl alkylsulfonate herbicides, benzothiazole herbicides, carbamate herbicides, carbonate herbicides, cyclohexene oxime herbicides, cyclopropylisoxazole herbicides, dicarboximide herbicides, dinitroaniline herbicides, dinitrophenol herbicides, diphenyl ether herbicides, dithiocarbamate herbicides, fumigant herbicides, halogenated aliphatic herbicides, imidazolinone herbicides, imide herbicides, inorganic herbicides, nitrile herbicides, organophosphorus herbicides, oxadiazolone herbicides, oxazole herbicides, phenoxy herbicides, phenylenediamine herbicides, pyrazole herbicides, pyridazine herbicides, pyridazinone herbicides, pyridine herbicides, pyrimidinediamine herbicides, pyrimidinyloxybenzylamine herbicides, quaternary ammonium herbicides, thiocarbamate herbicides, thiocarbonate herbicides, thiourea herbicides, triazine herbicides, triazinone herbicides, triazole herbicides, triazolone herbicides, triazolopyrimidine herbicides, uracil herbicides, and urea herbicides.

Exemplary hydrophilic herbicide electrolytes can be a salt of a herbicide selected from the group consisting of (4-chlorophenoxy)acetic acid, 2,3,5-tri-iodobenzoic acid, 2,3,6-TBA, 2,4,5-trichlorophenol, 2,4,5-trichlorophenoxyacetic acid, 2,4-D, 2,4-DB, 2,4-D-dimethylammonium, 2,4-DEP, 2-diethylaminoethyl hexanoate, 2-hydrazinoethanol, 2-naphthyloxyacetic acid, ACC, Acetic acid, Acetochlor, Acifluorfen, Acifluorfen-sodium, Aclonifen, Acrolein, Alachlor, Allidochlor, Alloxydim, Alloxydim sodium, Allyl alcohol, Alorac, Ametridione, Ametryn, Amibuzin, Amicarbazone, Amidochlor, Amidosulfuron, Aminocyclopyrachlor, Aminopyralid, Amiprofos-methyl, Amitrole, Ammonium carbonate, Ammonium sulphamate, Anilofos, Anisuron, Anthracene oil, Arsenic acid, Asulam, Asulam sodium, Atraton, Atrazine, Azafenidin, Azimsulfuron, Aziprotryne, Barban, Beflubutamid, Benazolin, Benazolin ethyl, Bencarbazone, Benfluralin, Benfuresate, Bensulfuron, Bensulfuron-methyl, Bensulide, Bentazone, Benzadox, Benzadox ammonium, Benzfendizone, Benzipram, Benzobicyclon, Benzofenap, Benzofluor, Benzoylprop, Benzoylprop-ethyl, Benzthiazuron, Bicyclopyrone, Bifenox, Bispyribac-sodium, Bromacil, Bromobonil, Bromobutide, Bromofenoxim, Bromoxynil, Bromoxynil butanoate, Bromoxynil heptanoate, Bromoxynil octanoate, Brompyrazon, Bromuron, Buminafos, Butachlor, Butafenacil, Butamifos, Butenachlor, Buthidazole, Buthiuron, Butralin, Butroxydim, Buturon, Butylate, Cacodylic acid, Cafenstrole, Calcium acid methanearsonate, Calcium arsenate, Calcium carbonate, Calcium cyanamide, Calcium hydroxide, Calcium phosphate, Cambendichlor, Caprylic acid potassium salt, Carbasulam, Carbetamide, Carboxazole, Carfentrazone, Carfentrazone-ethyl, Chlomethoxyfen, Chloral hydrate, Chloramben, Chloranocryl, Chlorazifop, Chlorazifop propargyl, Chlorazine, Chlorbromuron, Chlorbufam, Chloretazate, Chloreturon, Chlorfenac, Chlorfenprop-methyl, Chlorfluazole, Chlorflurenol, Chlorflurenol methyl, Chloridazon, Chlorimuron, Chlorimuron-ethyl, Chlornitrofen, Chloropon, Chlorotoluron, Chloroxuron, Chloroxynil, Chlorphonium, Chlorphonium chloride, Chlorprocarb, Chlorpropham, Chlorsulfuron, Chlorthal-dimethyl, Chlorthiamid, Cinidon-ethyl, Cinmethylin, Cinosulfuron, Cisanilide, Clacyfos, Clethodim, Cliodinate, Clodinafop, Clodinafop-propargyl, Clofibric acid, Clofop, Clofop-isobutyl, Clomazone, Clomeprop, Cloprop, Cloproxydim, Clopyralid, Clopyralid dimethylammonium, Clopyralid methyl, Clopyralid olamine, Clopyralid potassium, Clopyralid tripromine, Cloransulam-methyl, Cloxyfonac, Credazine, Cumyluron, Cyanatryn, Cyanazine, Cybutryne, Cycloate, Cyclopyranil, Cyclopyrimorate, Cyclosulfamuron, Cycloxydim, Cycluron, Cyhalofop, Cyhalofop-butyl, Cyperquat, Cyperquat chloride, Cyprazine, Cypromid, Daimuron, Dalapon, Dalapon-sodium, Dazomet, D-D, Defenuron, Delachlor, Desmedipham, Desmetryn, Di-allate, Dicamba, Dichlobenil, Dichlorprop, Dichlorprop-P, Dichlorprop-P 2-ethylyhexyl ester, Diclofop, Diclofop-methyl, Diclosulam, Didecyldimethylammonium chloride, Diethatyl ethyl, Difenopenten, Difenopenten ethyl, Difenoxuron, Difenzoquat, Difenzoquat metilsulfate, Diflufenican, Diflufenzopyr, Difunon, Dimefuron, Dimepiperate, Dimesulfazet, Dimethachlor, Dimethametryn, Dimethenamid, Dimethenamid-P, Dimethipin, Dimethyl disulfide, Dimethyl(4-piperidinocarbonyloxy-2,5-xylyl)sulfonium toluene-4-sulfonate, Dimexano, Dimidazon, Dinitramine, Dinofenate, Dinosam, Dinoseb, Dinoseb acetate, Dinoseb ammonium, Dinoseb diolamine, Dinoseb sodium, Dinoseb trolamine, Dinoterb, Dinoterb acetate, Diphenamid, Dipropalin, Dipropetryn, Diquat, Diquat dibromide, Diquat dichloride, Disodium methanearsonate, Disodium octaborate tetrahydrate, Disul, Disul-sodium, Dithiopyr, Diuron, Dixanthogen, DNOC, DNOC ammonium, DNOC potassium, DNOC sodium, Eglinazine-ethyl, Endothal, Epocholeone, EPTC, Erbon, Esprocarb, Etacelasil, Ethalfluralin, Ethametsulfuron-methyl, Ethanedial, Ethidimuron, Ethiozin, Ethofumesate, Ethoxyfen, Ethoxyfen ethyl, Ethoxysulfuron, Etinofen, Fatty acids (generic), Fenasulam, Fenchlorazole-ethyl, Fenoprop, Fenoprop-butometyl, Fenoprop-butotyl, Fenoprop-butyl, Fenoprop-isoctyl, Fenoprop-methyl, Fenoprop-potassium, Fenoprop-terboxyl, Fenoxaprop-ethyl, Fenoxaprop-P, Fenoxaprop-P-ethyl, Fenoxasulfone, Fenquinotrione, Fenthiaprop, Fenthiaprop ethyl, Fentrazamide, Fenuron, Fenuron TCA, Flamprop, Flamprop-isopropyl, Flamprop-methyl, Flamprop-M-isopropyl, Flazasulfuron, Florasulam, Florpyrauxifen, Florpyrauxifen-benzyl, Fluazifop-butyl, Fluazifop-P, Fluazifop-P-butyl, Fluazolate, Flucarbazone-sodium, Flucetosulfuron, Fluchloralin, Flufenacet, Flufenpyr-ethyl, Flumetsulam, Flumiclorac-pentyl, Flumioxazin, Flumipropyn, Fluometuron, Fluoridamid, Fluorodifen, Fluoroglycofen, Fluoromidine, Fluothiuron, Flupoxam, Flupropacil, Flupropanate-sodium, Flupyrsulfuron, Flupyrsulfuron-methyl-sodium, Fluridone, Flurochloridone, Fluroxypyr, Fluroxypyr-meptyl, Flurtamone, Fluthiacet methyl, Fomesafen, Foramsulfuron, Fosamine, Fosamine ammonium, Fuphenthiourea, Furyloxyfen, Glufosinate, Glufosinate-ammonium, Glufosinate-P, Glyphosate, Glyphosate trimesium, Glyphosate, isopropylamine salt, Glyphosate, potassium salt, Glyphosine, Halauxifen, Halauxifen-methyl, Halosafen, Halosulfuron-methyl, Haloxydine, Haloxyfop, Haloxyfop-etotyl, Haloxyfop-P, Haloxyfop-P-methyl, Heptopargil, Hexachloroacetone, Hexaflurate, Hexazinone, Imazamethabenz, Imazamethabenz-methyl, Imazamox, Imazapic, Imazapyr, Imazaquin, Imazethapyr, Imazosulfuron, Inabenfide, Indanofan, Indaziflam, lodobonil, lodosulfuron, lodosulfuron-methyl-sodium, lofensulfuron, lofensulfuron sodium, loxynil, loxynil lithium, loxynil octanoate, loxynil sodium, Ipfencarbazone, Iron sulphate, Isocarbamide, Isocil, Isomethiozin, Isonoruron, Isopolinate, Isopropalin, Isoproturon, Isopyrimol, Isouron, Isoxaben, Isoxachlortole, Isoxaflutole, Isoxapyrifop, Karbutilate, Lactofen, Lenacil, Linuron, Maleic hydrazide, MCPA, MCPA-thioethyl, MCPB, Mecoprop, Mecoprop-P, Medinoterb, Medinoterb acetate, Mefenacet, Mefluidide, Mepiquat, Merphos, Mesosulfuron, Mesosulfuron-methyl, Mesotrione, Metamifop, Metamitron, Metam-sodium, Metazachlor, Metazosulfuron, Methabenzthiazuron, Methazole, Methiopyrsulfuron, Methiozolin, Methiuron, Methoprotryne, Methoxyphenone, Methyl (((1-(5-(2-chloro-4-(trifluoromethyl)phenoxy)-2-nitrophenyl)-2-methoxyethylidene)amino)oxy)acetate, Methyl isothiocyanate, Methylarsonic acid, Methyldymron, Metobenzuron, Metobromuron, Metolachlor, Metosulam, Metoxuron, Metribuzin, Metsulfuron, Metsulfuron-methyl, Molinate, Monalide, Monolinuron, Monosodium methylarsonate, Monosulfuron, Monosulfuron-methyl, Monuron, Morfamquat, Morfamquat dichloride, Naproanilide, Napropamide, Napropamide-M, Naptalam, Neburon, Nicosulfuron, Nitralin, Nitrofen, Norflurazon, Noruron, O,O-dimethyl alpha-(2,4-dichlorophenoxyacetoxy)ethylphosphonate, Orbencarb, Orthosulfamuron, Oryzalin, Oxadiargyl, Oxadiazon, Oxapyrazon, Oxapyrazon-dimolamine, Oxapyrazon-sodium, Oxasulfuron, Oxaziclomefone, Oxyfluorfen, Paraquat, Paraquat dichloride, Pebulate, Pelargonic acid, Pendimethalin, Penoxsulam, Pentachlorophenol, Pentanochlor, Pentoxazone, Perfluidone, Pethoxamid, Phenisopham, Phenmedipham, Phenyl mercuric acetate, Phosametine, Picloram, Picloram-dimethylammonium, Picloram-trolamine, Picolinafen, Pinoxaden, Piperophos, Piproctanyl, Piproctanyl bromide, Pretilachlor, Primisulfuron, Primisulfuron methyl, Prodiamine, Profluazol, Profluralin, Profoxydim, Proglinazine, Proglinazine ethyl, Prometon, Prometryn, Propachlor, Propanil, Propaquizafop, Propazine, Propham, Propisochlor, Propoxycarbazone, Propoxycarbazone-sodium, Propyrisulfuron, Propyzamide, Prosulfocarb, Prosulfuron, Proximpham, Prynachlor, Pydanon, Pyraclonil, Pyraflufen, Pyraflufen-ethyl, Pyrazolynate, Pyrazosulfuron-ethyl, Pyrazoxyfen, Pyribambenz-isopropyl, Pyribambenz-propyl, Pyribenzoxim, Pyridafol, Pyridate, Pyriftalid, Pyriminobac-methyl, Pyrimisulfan, Pyrithiobac-sodium, Pyroxasulfone, Pyroxsulam, Quinclorac, Quinclorac-dimethylammonium, Quinmerac, Quinoclamine, Quinonamid, Quizalofop-ethyl, Quizalofop-P-ethyl, Quizalofop-P-tefuryl, Rimsulfuron, Saflufenacil, Sebuthylazine, Secbumeton, Sethoxydim, Siduron, Simazine, Simetryn, S-metolachlor, Sodium arsenite, Sodium carbonate, Sodium chlorate, Sodium chloride, Sodium monochloroacetate, Sulcotrione, Sulfallate, Sulfentrazone, Sulfometuron-methyl, Sulfosulfuron, Sulphuric acid, SYP-1924, TCA-sodium, Tebutam, Tebuthiuron, Tefuryltrione, Tembotrione, Tepraloxydim, Terbacil, Terbuchlor, Terbumeton, Terbuthylazine, Terbutryn, Tetcyclacis, Thenylchlor, Thiazafluron, Thiazopyr, Thidiazimin, Thidiazuron, Thiencarbazone-methyl, Thifensulfuron, Thifensulfuron-methyl, Thiobencarb, Tiafenacil, Tiocarbazil, Tolpyralate, Topramezone, Tralkoxydim, Triafamone, Tri-allate, Triapenthenol, Triasulfuron, Tribenuron, Tribenuron-methyl, Tribufos, Triclopyr, Triclopyr butotyl, Triclopyr triethylammonium, Tridiphane, Trietazine, Trifloxysulfuron, Trifloxysulfuron-sodium, Trifluralin, Triflusulfuron, Triflusulfuron-methyl, Trifopsime, Tritosulfuron, Urea sulphate, Vernolate, Xylachlor, and Zinc oxide.

For example, the hydrophilic active ingredient electrolyte is one selected from the group consisting of 2,4-DB, 2,4-DB-dimethylammonium, 2,4-DB-sodium, 2,4-D-dimethylammonium, 2,4-D-diolamine, 2,4-D-isopropylammonium, 2,4-D-tripromine, 2,4-D-trolamine, 4-aminopyridine, 8-hydroxyquinoline sulfate, abscisic acid, acephate, acifluorfen-sodium, acrolein, acrylonitrile, alloxydim-sodium, alpha-chlorohydrin, aminopyralid, amitrole, amitrole, ammonium sulfamate, ampropylfos, asulam-sodium, aviglycine hydrochloride, bentazone-sodium, bicyclopyrone, bilanafos-sodium, bispyribac-sodium, Bordeaux mixture, bromoxynil-potassium, bronopol, butoxycarboxim, butylamine, cacodylic acid, cartap hydrochloride, chlordimeform hydrochloride, chlormequat chloride, chloroacetic acid, chlorphonium chloride, chlorsulfuron, clethodim, clofencet-potassium, clopyralid, clopyralid-olamine, copper sulfate pentahydrate, cyanamide, cyanthoate, cyhalofop, dalapon, dalapon-sodium, daminozide, demeton-S-methylsulphon, dicamba, dicamba-sodium, dichlorprop-P, dichlorprop-potassium, diclofop, dicrotophos, difenzoquat metilsulfate, dikegulac-sodium, dimetilan, dipotassium phosphate, diquat dibromide, disodium octaborate, disul-sodium, DSMA, endothal, endothal-dipotassium, ethephon, ethyl formate, fenoxaprop-P, ferrous sulfate, florasulam, florpyrauxifen, fluothiuron, flupropanate-sodium, foramsulfuron, formaldehyde, formetanate hydrochloride, fosamine-ammonium, fosetyl-aluminium, furfural, glufosinate-ammonium, glyphosate-isopropylammonium, glyphosate-monoammonium, glyphosate-potassium, glyphosate-sesquisodium, glyphosate-trimesium, glyphosine, guazatine acetates, haloxyfop-P, heptamaloxyloglucan, hexaflurate, hymexazol, imazamox, imazamox, imazaquin, imazaquin-ammonium, imicyafos, iminoctadine triacetate, iodosulfuron-methyl, ioxynil-potassium, ioxynil-sodium, isolan, kasugamycin hydrochloride hydrate, maleic hydrazide, maleic hydrazide potassium salt, maleic hydrazide sodium salt, MCPA, MCPA-sodium, MCPB, mecoprop-P, mecoprop-potassium, mecoprop-sodium, mefluidide-diolamine, mefluidide-potassium, mepiquat chloride, mepiquat pentaborate, mercuric chloride, metam-sodium, metcamifen, methamidophos, methomyl, methylarsonic acid, metsulfuron-methyl, mevinphos, mevinphos (E)- isomer, monocrotophos, monopotassium phosphate, MSMA, nabam, naptalam-sodium, nicotine, nitenpyram, nithiazine, omethoate, oxamyl, oxydemeton-methyl, paraquat dichloride, phosfolan, phosphonic acid, picloram-potassium, picloram-tripromine, polyoxin B, potassium bicarbonate, potassium cyanate, propamocarb, propamocarb hydrochloride, prothiocarb hydrochloride, proxan, pyrasulfotole, quinmerac, sodium (Z)-3-chloroacrylate, sodium 2-phenylphenoxide, sodium 5-nitroguaiacolate, sodium bicarbonate, sodium chlorate, sodium chloroacetate, sodium o-nitrophenolate, sodium p-nitrophenolate, sodium selenate, spiroxamine, sulcotrione, TCA, TCA-sodium, tembotrione, thiocyclam hydrogen oxalate, topramezone, trichlorfon, trinexapac, validamycin, vamidothion, warfarin, warfarin-sodium.

For example, the emulsion may comprise
at least one lipophilic active ingredient selected from dimethenamid-P, S-metolachlor, and mixtures thereof; and
at least one hydrophilic active ingredient electrolyte selected from a salt of glyfosate or a salt of gluphosinate.

There is no need for high concentration of the polyanionic block copolymer surfactant in the emulsion, and about 0.1 w/w%, 0.5 w/w%, 1.0 w/w%, 1.5 w/w%, 2.0 w/w%, 3.0 w/w%, 4.0 w/w%, 5.0 w/w% or 6.0 w/w%, in combination with the second surfactant, will greatly improve the stability. Typically, the concentration of the polyanionic block copolymer surfactant in the emulsion is between 0.5 and 12 w/w%, preferably between 1 and 11 w/w%, preferably between 1.5 and 10 w/w%, preferably between 2 and 9 w/w%, preferably between 2.5 and 6 w/w%, preferably between 2 and 8 w/w%, preferably between 3 and 7 w/w%, with respect to the total weight of the final emulsion.

The concentration of the second surfactant in the emulsion is typically between 0.5 and 12 w/w%, preferably between 1 and 11 w/w%, preferably between 1.5 and 10 w/w%, preferably between 2 and 6 w/w%, preferably between 2.5 and 5 w/w%, preferably between 2 and 4 w/w%, preferably between 1.5 and 6 w/w%, with respect to the total weight of the final emulsion.

The emulsion of the invention can be stable even at high loads of salts such as the hydrophilic active ingredient electrolyte. For example, the concentration of the hydrophilic active ingredient electrolyte in the emulsion is above 10 w/w%, preferably above 12 w/w%, preferably above 15 w/w%, with respect to the total weight of the final emulsion. Thus, for example, the emulsion may comprise between 5 w/w% and 50 w/w%, with respect to the total weight of the final emulsion, of a hydrophilic active ingredient electrolyte, for example, between 5 w/w% and 30 w/w%, between 7 w/w% and 25 w/w%, between 8 w/w% and 22 w/w%, between 9 w/w% and 20 w/w%, or between 10 w/w% and 18 w/w%. Exemplary non-limitative examples of concentrations of hydrophilic active ingredient electrolyte in the emulsions are above 120 g/L, preferably at least 150 g/L, or between 120 g/L and 500 g/L or between 150 g/L and 300 g/L.

The total load of salts can be very high in the emulsions of the invention, for example, between 5 w/w% and 50 w/w%, with respect to the total weight of the final emulsion, for example, between 10 w/w% and 40 w/w%, between 12 w/w% and 35 w/w%, between 15 w/w% and 30 w/w%. Said salts may include the already mentioned hydrophilic active ingredient electrolytes, but also other salts, such as fertilizers. Said fertilizers can be added to the emulsion disclosed in the present document or as part of the tank mix.

The emulsion of the invention can also be stable even at high loads of the lipophilic active ingredient. Thus, for example, the emulsion may comprise between 25 w/w% and 80 w/w%, with respect to the total weight of the final emulsion, of a lipophilic active ingredient, for example, between 30 w/w% and 70 w/w%, between 32 w/w% and 65 w/w%, between 35 w/w% and 60 w/w%, or between 37 w/w% and 40 w/w% with respect to the total weight of the emulsion. For example, the emulsion may comprise between 200 g/L and 1000 g/L of the lipophilic active ingredient. Exemplary non-limitative examples of concentrations of lipophilic active ingredient in the emulsions are above 200 g/L, preferably at least 300 g/L, or between 250 g/L and 1000 g/L or between 300 g/L and 800 g/L of emulsion.

The emulsion of the invention comprises at least one lipophilic active ingredient, and can therefore comprise further lipophilic active ingredients. The organic phase can be comprised by one or more lipophilic active ingredients that are liquid at room temperature, or if any is solid at room temperature, an organic solvent can be added to solubilize solids and provide a liquid organic phase that can be emulsified in the aqueous phase. The emulsion of the invention further comprises one or more hydrophilic active ingredient electrolytes that are solubilized in the aqueous phase. Therefore, the aqueous phase comprises the polyanionic block copolymer surfactant and at least one hydrophilic active ingredient. Despite the resulting high concentration of electrolytes, no salting out of the polyanionic block copolymer surfactant has been observed, and the emulsions of the invention are surprisingly stable, even more than those using a polyanionic block copolymer surfactant alone. It has even been observed that further electrolytes can be added (e.g. fertilizers) without significantly affecting the stability of the emulsion.

The emulsion of the invention comprises a thickener. The specific type of thickener is not particularly relevant and those known in the art can be used. Thickeners are typically water-soluble polymers which exhibit suitable plastic properties in an aqueous medium. Suitable thickeners can be compounds which affect the flow behavior of the emulsion and may assist in its stabilization against caking. Mention may be made, for example, of commercial thickeners based on polysaccharides, such as methylcellulose, carboxymethylcellulose, hydroxypropylcellulose, Xanthan Gum, synthetic polymers such as acrylic acid polymers, polyvinyl alcohol or polyvinyl pyrrolidones, silicic acid or phyllosilicates such as montmorillonites, attapulgites and bentonites, which may be hydrophobized. Xanthan Gum is preferred. The concentration of thickeners in the final emulsion will generally not exceed 2 w/w%, based on the total weight of the final emulsion, and is preferably in the range from 0.01 to 2 w/w%, in particular from 0.02 to 1.5 percent by weight and especially from 0.1 to 1 w/w%, based on the total weight of the final emulsion.

### Polyanionic block copolymer surfactant

It is preferred that in the polyanionic block copolymer surfactant at least 90 w/w% of the hydrophobic moiety comprises hydrophobic monomers. In some cases, a small number of hydrophilic monomers (i.e., less than 10 percent by monomer number) may be introduced to the hydrophobic moiety. For example, the hydrophobic monomers are selected from the group consisting of acrylate esters or derivatives thereof, methacrylate esters or derivatives thereof, styrene or derivatives thereof, and any combination thereof.

An alkyl acrylate monomer, such as a methyl, ethyl, or butyl acrylate, is one exemplary embodiment in this regard. For example, the hydrophobic monomer is selected from a group consisting of methylacrylate, ethylacrylate, n-propylacrylate, n- butylacrylate, 2-ethyl-hexyl acrylate, methylmethacrylate, ethylmethacrylate, n-propylmethacrylate, n-butylmethacrylate, 2-ethyl-hexyl methacrylate and mixtures thereof, for example, the hydrophobic monomer is ethyl acrylate.

The hydrophilic moiety of the anionic surfactant can be a hydrophilic block copolymer. Said hydrophilic moiety comprises at least 60 w/w% of charged monomers, for example, at least 70 w/w% or at least 80 w/w% or at least 90 w/w%. In one embodiment, 100 w/w% of the hydrophilic moiety is made of charged monomers. Exemplary amounts of charged monomer are 68 w/w%, 77 w/w%, 83 w/w%, or 88 w/w% with respect to the hydrophilic moiety.

Also, the polyanionic block copolymer surfactant comprises at least 35 w/w% of charged, with respect to the total weight of the polyanionic block copolymer surfactant, preferably at least 45 w/w%, or 55 w/w%, for examples 58 w/w% with respect the total weight of the anionic surfactant.

The charged monomers of the anionic surfactant can be zwitterionic monomers, for example anionic monomers. Thus, it is preferred that at least 60 percent of the monomers in the hydrophilic moiety are anionic monomers, typically a sulfonate group, for example, 2-acrylamido-2-methylpropane sulphonate (AMPS). Therefore, less than 40 w/w% of the monomers in the hydrophilic moiety are neutral hydrophilic monomers, for example one selected from a group consisting of N-vinylpyrrolidone, ethylene oxide, glycoside acrylate, acrylamide and mixtures thereof.

Typically, the weight percentage of the hydrophilic moiety is at least 50 w/w%, preferably 65-90 w/w%, for example, 70-85 w/w%, with respect to the total weight of the polyanionic block copolymer surfactant.

In relation to its total weight, the polyanionic block copolymer surfactant typically comprises up to 150 monomers, or up to 85 monomers, for example 63 monomers. Thus, the weight of the polyanionic block copolymer surfactant can be up to 100,000 g/mol, typically up to about 31,000 g/mol, for example, about 17,000 g/mol, about 12,000 g/mol. Alternatively, the weight of the polyanionic block copolymer surfactant can be 8,000 to 50,000 g/mol, for example 10,000 to 25,000 g/mol.

The hydrophilic moiety can weight 5,000 to 100,000 g/mol, typically 6,000 to 50,000 g/mol. It, is preferred that the weight of the hydrophilic moiety is 7,000 to 30,000 g/mol, for example 8,000 to 12,000 g/mol.

The hydrophobic moiety can weight 500 to 5,000 g/mol, typically 1,000 to 4,000 g/mol. For example, the hydrophobic moiety comprises alkyl acrylate monomers, preferably ethyl acrylate monomers, and the weight of the hydrophobic moiety is 1,000 to 4,000 g/mol, for example 1,500 to 3,500 g/mol, preferably 1,500 to 3,000 g/mol.

Thus, it is preferred that the molar ratio of the hydrophobic moiety to the hydrophilic moiety is 1:2-4. For example, the weight ratio between the hydrophobic moiety and the hydrophilic moiety ([hydrophobic moiety]:[hydrophilic moiety]) is typically lower than 0.6, lower than or equal to 0.5, lower than or equal to 0.4, lower than or equal to 0.3, or lower than or equal to 0.2. Typically, the weight ratio between the hydrophobic moiety and the hydrophilic moiety ([hydrophobic moiety]:[hydrophilic moiety]) is between 0.01 and 0.6, for example, between 0.1 and 0.3.

A typical composition of the polyanionic block copolymer surfactant used in the emulsion (or suspoemulsion thereof) disclosed herein comprises:
(A) an hydrophobic moiety obtained by polymerization of at least one hydrophobic monomer selected from the group consisting of methylacrylate, ethylacrylate, n-propylacrylate, n-butylacrylate, 2-ethyl-hexyl acrylate, methylmethacrylate, ethylmethacrylate, n-propylmethacylate, n-butylmethacrylate and 2-ethyl-hexyl methacrylate, especially from methylacrylate, ethylacrylate, and butyl acrylate; said hydrophobic moiety comprising at least 90 wt percent of its units derived from said hydrophobic monomers, and said hydrophobic moiety having a molecular weight ranging from 1,000 to 4,000 g/mol, for example from 1,500 to 3,500 g/mol, for example from 1,500 to 3,000 g/mol; and A first aspect is an oil-in-water agrochemical emulsion comprising
   (i) an aqueous phase, for example, between 10 and 90 w/w%, with respect to the total weight of the final emulsion;
   (ii) a liquid organic phase emulsified in the aqueous phase, the liquid organic phase comprising at least one lipophilic active ingredient and, optionally, a lipophilic organic solvent;
   (iii) at least 5 w/w%, with respect to the total weight of the final emulsion, of salts;
   (iv) a thickener; and
   (v) a combination of surfactants comprising
      - between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant; and
      - between 0.1 and 15 w/w%, with respect to the total weight of the final emulsion, of a second surfactant, typically lipophilic, selected from
polyalcoxylated alcohols selected from the group consisting of esters of polyalkoxylated polyols, polyalkoxylated polyols, and polyalkoxylated C4-C30 aliphaitic alcohols; and aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates.ular weight preferably ranging from 8,000 to 50,000 g/mol, for instance from 10,000 to 25,000 g/mol.

The polyanionic block copolymer surfactants are optionally neutralized with a basic compound. The basic compounds may be any known in the art that are capable of neutralizing the anionic surfactants. Basic compounds include, for example, inorganic bases, C₈₋₁₈ alkyl amine polyalkoxylates, alkanol amines, alkanol amides, and mixtures thereof.

Exemplary inorganic bases include ammonium hydroxides, sodium hydroxides, potassium hydroxides, calcium hydroxides, magnesium hydroxides, zinc hydroxides, and mixtures thereof. The C₈₋₁₈ alkyl amine polyalkoxylates may be, for example, C₈₋₁₈ alkyl amine polypropoxylates and/or C₈₋₁₈ alkyl amine polyethoxylates. Exemplary C₈₋₁₈ alkyl amine polyalkoxylates include tallow amine polyalkoxylates, cocoamine polyalkoxylates, oleylamine polyalkoxylates, and stearylamine polyalkoxylates. The C₈₋₁₈ alkyl amine polyethoxyates may have from about 2 to about 50 moles of ethylene oxide per molecule, more preferably from about 2 to about 20 moles of ethylene oxide per molecule. Exemplary C₈₋₁₈ alkyl amine polyethoxylates include tallow amine ethoxylates (2 moles EO or 8 moles EO), cocoamine ethoxylates, oleylamine ethoxylates, and stearylamine ethoxylates. Exemplary alkanol amines include diethanol amine and triethanol amine. Exemplary alkanol amides include oleic diethanolamide and linoleic diethanolamide, and the diethanolamides of other C₈₋₁₈ fatty acids.

### Second surfactant

The second surfactant is one selected from the group consisting of
polyalcoxylated alcohols selected from the group consisting of esters of polyalkoxylated polyols, polyalkoxylated polyols, and polyalkoxylated C₄-C₃₀ aliphaitic alcohols; and
aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates.

It is preferred that the second surfactant is selected from the group of the polyalkoxylated sorbitans or esters thereof, for example a polyethoxylated sorbitan having the formula (I) 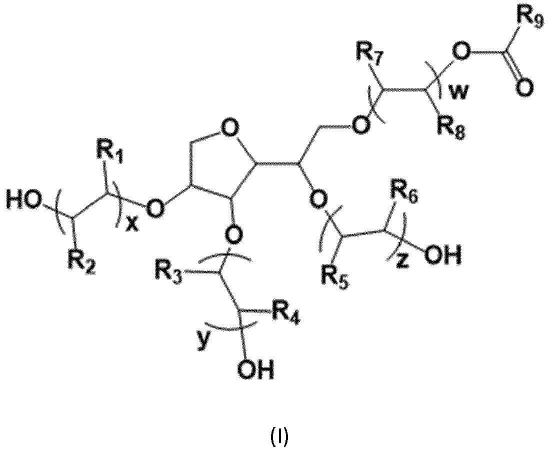 wherein
each of R₁, R₂, R₃, R₄, R₅, R₆, R₇ and R₈ is independently selected from the group consisting of hydrogen and C₁-C₃ alkyl;
R₉ is a C₁-C₃₀-alkyl or a C₂-C₃₀-alkenyl group; and
each of x, y, z and w is a natural number comprised between 0 and 20.

Another preferred second surfactant is a polyalkoxylated C4-C30 aliphatic alcohol of formula (II)

RₐO(CH(R_{b})-C(H)R_{c})ₙ (II)

wherein
Rₐ is a C₄-C₃₀ alkyl, alkenyl or alkynyl group; and
each of R_{b} and R_{c} is independently selected from the group consisting of hydrogen and C₁-C₃ alkyl.

For example, the second surfactant can be an aliphatic (unsubstituted) or aromatic (unsubstituted) sulphate or sulphonate selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates, preferably and alkyl sulphate. Such compounds are for examples sulphates of formula (IIIa)

R₁₀-(O)ₓ-SO₃⁻ M⁺

or for example sulphonates of formula (IIIb)

R₁₀-SO₃

wherein R₁₀ is selected from the group consisting of an unsubstituted C₁-C₂₀ alkyl, unsubstituted C₇-C₃₀ alkyl aryl, unsubstituted C₇-C₃₀ aryl alkyl and unsubstituted C₆-C₃₀ aryl;
x is 0 or 1; and
M⁺ is a monovalent cation, preferably, an alkaline cation, such as one selected from the group consisting of lithium, sodium, potassium, rubidium, and cesium preferably lithium, sodium or potassium.

### Examples of emulsion compositions

Thus, considering the above, an exemplary oil-in-water agrochemical emulsion described herein may comprise
(i) an aqueous phase, for example, between 10 and 90 w/w%, with respect to the total weight of the final emulsion;
(ii) a liquid organic phase emulsified in the aqueous phase, the liquid organic phase comprising at least one lipophilic active ingredient and, optionally, a lipophilic organic solvent;
(iii) at least 5 w/w%, with respect to the total weight of the final emulsion, of salts;
(iv) a thickener; and
(v) a combination of surfactants comprising
   - between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant; and
   - between 0.1 and 15 w/w%, with respect to the total weight of the final emulsion, of a second surfactant, typically lipophilic, selected from

   polyalcoxylated alcohols selected from the group consisting of esters of polyalkoxylated polyols, polyalkoxylated polyols, and polyalkoxylated C₄-C₃₀ aliphaitic alcohols; and
   aliphatic or aromatic sulphates selected from the group consisting of alkyl sulphates, alkyl aryl sulphates, aryl alkyl sulphates, and aryl sulphates.

Alternatively, it can be a formulation comprising
(i) an aqueous phase, for example, between 10 and 90 w/w%, with respect to the total weight of the final emulsion;
(ii) a liquid organic phase emulsified in the aqueous phase, the liquid organic phase comprising at least one lipophilic active ingredient and, optionally, a lipophilic organic solvent;
(iii) at least 5 w/w%, with respect to the total weight of the final emulsion, of salts;
(iv) a thickener; and
(v) a combination of surfactants comprising
   - between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant; and
   - between 0.1 and 15 w/w%, with respect to the total weight of the final emulsion, of a second surfactant, typically lipophilic, selected from

   polyalcoxylated alcohols selected from the group consisting of esters of polyalkoxylated polyols, polyalkoxylated polyols, and polyalkoxylated C₄-C₃₀ aliphaitic alcohols; and
   aliphatic or aromatic sulphonates selected from the group consisting of alkyl sulphonates, alkyl aryl sulphonates, aryl alkyl sulphonates and aryl sulphonates.

Alternatively, it can be a formulation comprising
(i) an aqueous phase;
(ii) a liquid organic phase emulsified in the aqueous phase, the liquid organic phase comprising between 25 and 50 w/w%, preferably between 25 w/w% and 40 w/w%, with respect to the total weight of the final emulsion, of a lipophilic active ingredient and, optionally, a lipophilic organic solvent;
(iii) at least 5 w/w%, with respect to the total weight of the final emulsion, of salts;
(iv) a thickener; and
(v) a combination of surfactants comprising
   - between 1.0 and 10 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers comprising a sulphate group and wherein the weight percentage of the charged monomers is at least 35 w/w% with respect to the total weight of the polyanionic block copolymer surfactant; and
   - between 0.1 and 10 w/w%, with respect to the total weight of the final emulsion, of a surfactant soluble in the liquid organic phase selected from

   polyalcoxylated alcohols selected from the group consisting of esters of polyalkoxylated polyols, polyalkoxylated polyols, and polyalkoxylated C₄-C₃₀ aliphaitic alcohols; and
   aliphatic or aromatic sulphates or sulphonates selected from the group consisting of alkyl sulphates, alkyl aryl sulphates, aryl alkyl sulphates and aryl sulphates, alkyl sulphonates, alkyl aryl sulphonates, aryl alkyl sulphonates and aryl sulphonates.

Another exemplary oil-in-water agrochemical emulsion described herein may comprise
(i) an aqueous phase;
(ii) a liquid organic phase emulsified in the aqueous phase, the liquid organic phase comprising between 25 w/w% and 40 w/w%, with respect to the total weight of the final emulsion, of a lipophilic active ingredient and, optionally, a lipophilic organic solvent;
(iii) at least 5 w/w%, with respect to the total weight of the final emulsion, of salts comprising a hydrophilic active ingredient;
(iv) a thickener; and
(v) a combination of surfactants comprising
   - between 1.0 and 10 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers comprising a sulphonate group and wherein the weight percentage of the charged monomers is at least 35 w/w% with respect to the total weight of the polyanionic block copolymer surfactant; and
   - between 0.1 and 10 w/w%, with respect to the total weight of the final emulsion, of a surfactant soluble in the liquid organic phase selected from

   polyalcoxylated alcohols selected from the group consisting of esters of polyalkoxylated polyols, polyalkoxylated polyols, and polyalkoxylated C₄-C₃₀ aliphatic alcohols; and
   aliphatic or aromatic sulphates or sulphonates selected from the group consisting of alkyl sulphates, alkyl aryl sulphates, aryl alkyl sulphates and aryl sulphates, alkyl sulphonates, alkyl aryl sulphonates, aryl alkyl sulphonates and aryl sulphonates.

Another exemplary oil-in-water agrochemical emulsion described herein may comprise
(i) an aqueous phase;
(ii) a liquid organic phase emulsified in the aqueous phase, the liquid organic phase comprising between 25 w/w% and 40 w/w%, with respect to the total weight of the final emulsion, of a lipophilic active ingredient and, optionally, a lipophilic organic solvent;
(iii) at least 5 w/w%, with respect to the total weight of the final emulsion, of salts comprising a hydrophilic active ingredient;
(iv) a thickener; and
(v) a combination of surfactants comprising
   - between 1.0 and 10 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers comprising a sulphate group and wherein the weight percentage of the charged monomers is at least 35 w/w% with respect to the total weight of the polyanionic block copolymer surfactant; and
   - between 0.1 and 10 w/w%, with respect to the total weight of the final emulsion, of a surfactant soluble in the liquid organic phase is a polyethoxylated sorbitan having the formula (I) 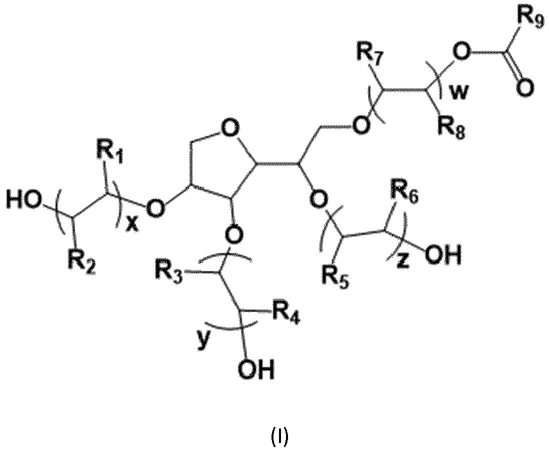 wherein
      each of R₁, R₂, R₃, R₄, R₅, R₆, R₇ and R₈ is independently selected from the group consisting of hydrogen and C₁-C₃ alkyl;
      R₉ is a C₁-C₃₀-alkyl or a C₂-C₃₀-alkenyl group; and
      each of x, y, z and w is a natural number comprised between 0 and 20.

Another exemplary oil-in-water agrochemical emulsion described herein may comprise
(i) an aqueous phase;
(ii) a liquid organic phase emulsified in the aqueous phase, the liquid organic phase comprising between 25 w/w% and 50 w/w%, with respect to the total weight of the final emulsion, of a lipophilic active ingredient selected from the group consisting of selected from dimethenamid-P, S-metolachlor, and mixtures thereof and, optionally, a lipophilic organic solvent;
(iii) between 5 and 30 w/w%, with respect to the total weight of the final emulsion, of a hydrophilic active ingredient electrolyte selected from organophosphorus herbicides, for example, one selected from the group consisting of salts of amiprofos-methyl, amiprophos, anilofos, bensulide, bilanafos, butamifos, clacyfos, 2,4-DEP, DMPA, EBEP, fosamine, glufosinate, glufosinate-P, glyphosate, huangcaoling, piperophos, and shuangjiaancaolin;
(iv) a thickener; and
(v) a combination of surfactants comprising
   - between 1.0 and 10 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers comprising a sulphate group, such as 2-acrylamido-2-methylpropane sulphonate, and wherein the weight percentage of the charged monomers is at least 35 w/w% with respect to the total weight of the polyanionic block copolymer surfactant; and
   - between 0.1 and 10 w/w%, with respect to the total weight of the final emulsion, of a surfactant soluble in the liquid organic phase is a polyethoxylated sorbitan having the formula (I) 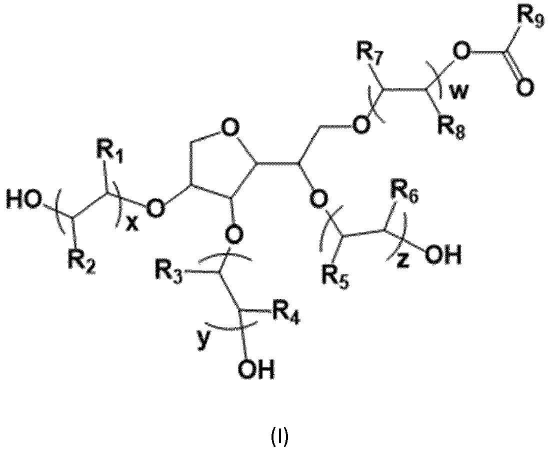
   wherein
   each of R₁, R₂, R₃, R₄, R₅, R₆, R₇ and R₈ is independently selected from the group consisting of hydrogen and C₁-C₃ alkyl;
   R₉ is a C₁-C₃₀-alkyl or a C₂-C₃₀-alkenyl group; and
   each of x, y, z and w is a natural number comprised between 0 and 20.

### Method of preparation of the emulsions (EW) disclosed in this document

The preparation of oil-in-water emulsions typically involve the preparation of an aqueous phase and an organic phase, followed by the mixing of both so that the latter is emulsified in the former. For example, EW formulations can be prepared by adding the surfactants to the water phase and then adding the organic phase and performing high shear.

In addition to the usual methods for the preparation of EW formulations, the inventors have found that a modification of this process provides emulsions with improved stability. It also comprises the preparation of an organic phase and an aqueous phase. However, in this modified process the premix does not comprise the complete load of salts (typically comprises no salts). After emulsification, the complete amount of salts are added to the emulsion, preferably preceded by a first amount of a thickener. Therefore, the steps of this process can be summarized as follows:
- Preparing the pre-mixes of the oil phase and the aqueous phase. In the case of the aqueous phase only with a partial load of the salts that will make the final composition of the emulsion. For example, 50 w/w% of the salts that will make the final composition of the emulsion, or 40 w/w % or 20 w/w%, typically with no salts (i.e. 0 w/w%).
- Mixing of the pre-mixes of the aqueous phase and the oil phase so that the latter is emulsified in the former.
- Optionally, adding a first amount of thickener. For example, 10 w/w%, 30 w/w%, or 50 w/w% of the thickener that will make the final composition of the emulsion, or 40 w/w % or 20 w/w% .
- Then, mixing the emulsion obtained in the previous step with an amount of salts up to the total amount in the composition. Preferably, all of the salts, especially in the case of hydrophilic active ingredient electrolytes, are added in this step, so that during the emulsification no salts are present.
- Finally, adding a second amount of the thickener. This second amount completes whatever amount of thickener was not added before, for example 90 w/w%, 70 w/w%, or 50 w/w% of the thickener that will make the final composition of the emulsion, or 60 w/w % or 80 w/w%, or all of the thickener in the final emulsion, if none was added before.

The salts included in the emulsion disclosed herein typically comprise a hydrophilic active ingredient electrolyte, preferably a salt of glufosinate or of glyphosate. Thus, the process preferably comprises:
(i) emulsifying an organic phase comprising between 0.1 and 75 w/w%, with respect to the total weight of the final emulsion, of a lipophilic active ingredient, optionally a lipophilic organic solvent, and between 0.1 and 15 w/w%, with respect to the total weight of the final emulsion, of a second surfactant, typically insoluble in water, selected from
   polyalcoxylated alcohols selected from the group consisting of polyalkoxylated polyols or esters thereof, and polyalkoxylated C₄-C₃₀ aliphatic alcohols; and aliphatic or aromatic sulphates or sulphonates selected from the group consisting of alkyl sulphates, alkyl aryl sulphates, aryl alkyl sulphates and aryl sulphates, alkyl sulphonates, alkyl aryl sulphonates, aryl alkyl sulphonates and aryl sulphonates;
   into an aqueous phase comprising water and between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant;
(ii) optionally, mixing the previously obtained emulsion with a first amount of thickener;
(iii) mixing the emulsion obtained in the previous step with 5 w/w% or more, with respect to the total weight of the final emulsion, of a hydrophilic active ingredient electrolyte, preferably a salt of glufosinate or of glyphosate;
(iv) mixing the emulsion obtained in the previous step with a thickener.

### Suspoemulsion of the invention

In addition to the advantages shown by the emulsions described herein, the inventors have found that the emulsions can be used for the preparation of surprisingly stable suspoemulsions. Suspoemulsions can be prepared by mixing an EW formulation, in this case an emulsion according to the invention, and an SC formulation. An alternative method for the preparation of suspoemulsions does not necessarily involve preparing both formulations separately:
1) Add all the coformulants including those that would make up the SC, with the exception of the organic phase and the thickener.
2) Mix until dissolvable materials have been dissolved.
3) Add the organic phase (optionally with surfactants).
4) High shearing or standard mixing.
5) Addition of a thickener.

The resulting SE formulation is a formal mixtures of an SC formulation and the components that would make up an EW formulation of the invention.

As a result, the suspoemulsion is a formulation comprising an aqueous continuous phase which contains emulsified oily droplets and solids in suspension. In the present case, also containing a high load of dissolved salts. The combination of a stable emulsion with a stable aqueous suspension, such as an SC formulation, does not guarantee the production of a stable suspoemulsion, which presents its own particular difficulties. Thus, it was a surprise that the use of the emulsion of the invention (or its components mixed with an SC formulation) also provided a stable suspoemulsion.

The suspoemulsions of the invention can be prepared by mixing an emulsion according to the invention and an SC formulation. SC formulations are aqueous formulations wherein the active ingredient is suspended in solid form.

The proportion between the SC and the EW formulation can vary, for example from 1:50 to 50:1 (SC:EW) in weight, for example, between 1:30 and 10:1, or between 1:20 and 1:1. The suspoemulsions obtainable through the above process is surprisingly stable and are therefore an aspect of the invention.

Just as the emulsions, the suspoemulsions of the invention may comprise agriculturally acceptable inert additives. These may come from the emulsions disclosed herein or can be incorporated in the SC formulation.

The suspoemulsions of the invention can be mixed with tank adjuvants prior to their application in the field to improve physical properties and efficacy. Some substances can be used as agriculturally acceptable inert additives in the suspoemulsion of the invention or mixed as tank additives with the suspoemulsion of the invention prior to application in the field. The tank mixes resulting from mixing the suspoemulsions of the invention with one or more tank adjuvants are also an aspect of the present invention.

Non-limiting examples of agriculturally acceptable inert additives and of tank adjuvants are surfactants, wetting agents (or spreaders), stickers, emulsifiers, dispersants, suspending agents, plant penetrants (or translocators), antifreeze agents, preservative agents, binders, fertilizers, thickening agent, anti-oxidation agents, drift retardants, buffers, inverting agents, soil penetrants, UV absorbers, protectant binders, anti-foaming agents or humeactants, such as those already disclosed elsewhere in the present document.

The suspoemulsions of the invention may comprise further surfactants selected from the group of alkyl polyglucosides. For example, the suspoemulsion may comprise a combination of an alkyl sulfate, the polyanionic block copolymer surfactant and a an alkyl polyglucoside.

### Methods and Applications

The present document discloses a method for controlling undesired plants, pests or diseases comprising contacting an effective amount of the emulsions of the invention with the locus of said undesired plants, pests or diseases.

The methods disclosed in the present document refer to any undesired plant, pest or disease, for which the herbicide, insecticide or fungicide has known activity. In the same way the methods disclosed in the present document refer to any crop for which the herbicide, insecticide or fungicide has known protecting activity. The methods disclosed in the present document refer to any crop plants, including but not limited to monocotyledons such as sugar cane, cereals, rice, maize (corn); or dicotyledon crop such as beets (such as sugar beet or fodder beet); fruits (such as pomes, stone fruits, or soft fruits, for example apples, pears, plums, peaches, almonds, cherries, strawberries, raspberries, or blackberries); leguminous plants (such as beans, lentils, peas, or soybeans); oil plants (such as rape, mustard, poppy, olives, sunflowers, coconut, castor oil plants, cocoa beans, or groundnuts); cucumber plants (such as marrows, cucumbers or melons); fiber plants (such as cotton, flax, hemp, or jute); citrus fruits (such as oranges, lemons, grapefruit, or mandarins); vegetables (such as spinach, lettuce, cabbages, carrots, tomatoes, potatoes, cucurbits, or paprika); lauraceae (such as avocados, cinnamon, or camphor); tobacco; nuts; coffee; tea; vines; hops; durian; bananas; natural rubber plants; and ornamentals (such as flowers, shrubs, broad-leaved trees, or evergreens, for example conifers).

The emulsions disclosed in the present document, whether neat or as tank mixes, are applied to the field in different amounts depending on the specific active ingredients used, the target crop and the unwanted plant, pest or disease to be controlled. In some embodiments, the active ingredients are each applied in an amount from about 1 g/ha to about 1000 g/ha, or from 100 g/ha to about 700 g/ha.

The emulsions disclosed in the present document can be applied before planting, at the time of planting or after planting.

### Experiments

SLES: Sodium lauryl ether sulfate
Nansa 63B: sodium alkyl benzene sulphonate
PolyAgro A: as described in Example 1 below
Soprophor 3D33: polyanionic surfactant. 2,4,6-Tris(1-phenylethyl) polyoxyethylenated phosphate ester.
Soprophor 4D348: ethoxylated tristyrylphenols sulphates (16 units)
AF-100: Silica
Zoharpon SLS Powder: Sodium Lauryl Sulfate. Ionic surfactant
Agnique PG 9116: Alkyl PolyGlycoside. Non-ionic surfactant
Kelzan AP-AS: Xanthan Gum. Thickener
ATLOX 4913: graft copolymer of PMMA backbone with several PEO chains grafted onto the backbone.
AGRILAN 755: acrylate copolymer
ATLOX 4917: styrene acrylic co-polymer
ATLOX 4919: D-Glucopyranose, oligomeric

### Example 1: preparation of a polyanionic block copolymer surfactant used in the present emulsions

A sample of a polyanionic block copolymer surfactant as used in the present document was prepared following Example 1 of WO 2017/098325 A1 (pages 46 to 48): PolyAgro A.

PolyAgro A is a di-block copolymer, with a total weight of 17000 g/mol, composed of a hydrophobic moiety and a hydrophilic moiety. The hydrophilic moiety is made of sodium 2-Acryloylamino-2-methylpropane-I-sulfonate (AMPS) monomers, which represent 77 w/w% of the total weight of the copolymer. The other 23 w/w% of the copolymer corresponds to the hydrophobic moiety which is made of ethyl acrylate monomers. The total amount of monomers in the copolymer (degree of polymerization, DPn) is 85 monomers.

PolyAgro A was obtained following procedure described below:
Into a 2L double jacketed reactor equipped with mechanical agitator and reflux condenser was added 11.26 g of O-etyl-S-(1-methoxycarbonylethyl)anthate (CH3CH(C02CH3))S(C=S)OEt), 264.08g of Ethanol, and 356.32g of De-ionized water and 1400g of AMPS(Na) solution (50 percent active) and 1.52g of 4,4'-Azobis(4-cyanopentanoic acid). The reactor contents were heated to 70 degrees centigrade under agitation and nitrogen. The reaction mixture was aged at 70 degrees centigrade for a further hour whereupon it was cooled to ambient temperature and discharged. The measured solids content was 37.6 percent (115 degrees centigrade, 60 mins). GPC Mals: Mn=16300 Mw=2600 IP=1.6.

Into a 5L double jacketed reactor equipped with mechanical agitator and reflux condenser was added 2127g of the above solution and 330g of de-ionized water. The reactor contents were heated to 70 degrees centigrade under agitation and a nitrogen stream. Once 70 degrees centigrade was reached, 106.67g of ethyl acrylate (EA) were added over 2h and 37.37g of a 10 w/w% solution of 4,4'-Azobis(4-cyanopentanoic acid) was concomitantly added over 2.5h. After the addition of the initiator solution was finished, the reaction solution was further aged for one hour. Thereafter a shot of 44.85g of 10 w/w% solution of 4,4'-Azobis(4-cyanopentanoic acid) was added and the mixture aged at 70 degrees centigrade for a further hour whereupon it was cooled to ambient temperature and discharged. The measured solids content was 40.0 percent (115 degrees centigrade, 60 mins). Ethanol was removed from the polymer solution using a rotary evaporator. Water was added to achieve a polymer solution with a final solids content of 40.4 percent.

2600g of polymer solution was placed in-a 5L double jacketed reactor equipped with mechanical agitator and reflux condenser. The pH of the solution was increased to 8,5 using a 50 percent solution of NaOH. The mixture was heated to 70 degrees centigrade with stirring whereupon 48.4g of a 30 w/w% solution of hydrogen peroxide was added over 1 hour. Once additions were finished, the solution was aged for a further 3h whereupon it was cooled and discharged.

The residuals monomers were measure by HPLC and GC (AMPS = 22ppm, EA = 2ppm). The measured solids content was 37.5 percent. The polymer is used in the formulations according to the below examples from a ready aqua polymer solution at concentration of about 30 percent w/w.

### Example 2: Stability of EW formulations comprising a polyanionic block copolymer surfactant

5% by weight (vs EW weight) of the anionic surfactant was dissolved in the water phase. Glufosinate ammonium was added and dissolved. The organic phase was added to the water phase and emulsified using IKA Ultra Turrax T10 for 15s.

The stability of each formulation was checked by eye inspection after 0.5 hours, 1 hour, 2 hours and 24 hours. The results are summarized in the following Table 1.

**Table 1**

| Surfactant | 0.5 h | 1h | 2h | 24 h |
|---|---|---|---|---|
| SLES | Large amount of dark sediment (Phase separation) | | | |
| Nansa 63B | | | | |
| PolyAgro A (Example 1) | Several droplets of separated organic phase at bottom, uniform light emulsion | | Additional thin line of light sediment | Light sediment line at ^{~}25% volume |
| Soprophor 3D33 | Thin line of separated organic phase at bottom, uniform light emulsion | | | Light sediment line at ^{~}12.5% volume |

PolyAgro A performed better than any of the other anionic surfactants in line with the results described in WO 2017/098325 A1. PolyAgro A did not display any separation at the top, unlike all the other anionic surfactants tested. A small amount of phase separation could be appreciated at the top after 24 hours. In order to further improve the stability of the formulations, the inventors tested the addition of a second surfactant, typically one soluble in the organic phase.

### Example 3: Stability test of emulsions comprising different surfactants soluble in the liquid organic phase

PolyAgro A as prepared in Example 1 was dissolved in the water phase. 5% of an oil-soluble surfactant was dissolved in the organic phase. The organic phase was added to the water phase and emulsified using IKA Ultra Turrax T10 for 15s. xanthan gum was added to increase the emulsions viscosities. Glufosinate ammonium was added and mixed until dissolved. The results are shown in Table 2.

**Table 2**

| | D90 | D50 | D10 | Appearance | Sediment volume after |
|---|---|---|---|---|---|
| | (5 d) | (5 d) | (5 d) | (after 5d at r.t.) | dilution to 5% in water (total 50 mL) |
| low HLB random polymer | | | | Phase separation | - |
| low HLB high MW polymer | | | | dark (less than sorbitan fatty acid ester ) homogeneous; sediment line ^{~}1/5 height; several drops of phase separation | 0.75 mL |
| Alcohol ethoxylate | 13 | 5.63 | 2.03 | Light homogeneous | 0.75 mL |
| Fatty alcohol ethoxylate | | | | light homogenous; sediment line at ^{~}1/6 height. | Not measured |
| sorbitan fatty acid ester | | | | dark Homogenous; 1 drop of phase separation on bottom. | Not measured |
| sorbitan fatty acid ester ethoxylate | 16.4 | 6.51 | 1.16 | Light homogeneous; sediment line at ^{~}1/5 height. | 0.5 mL |
| oil-soluble alkylaryl sulphonate | 15.4 | 8.28 | 4.66 | Light homogeneous; sediment line at ^{~}1/6 height. | Not measured |

Not all surfactants improved the stability of the formulation. For example, the use of Atlox 4914 (polyisobutylene succinic anhydride-polyethylene glycol) resulted in immediate phase separation. On the other hand, Atlox 4838B (calcium alkyl-aryl sulphonate) and Genapol X060 (isotridecyl alcohol polyglycol ether) further increased the stability of the formulation with respect to the formulation containing PolyAgro A only. Ecosurf EH 3 (2-methylhexyl alcohol polyethylene/polypropylene oxide) provided also more stable formulations but presented some mixing problems. The best overall results were obtained with polysorbates: Span 20 (sorbitan laureate), Tween 20 (polyethoxylated sorbitan ester) or Atlox 4916 (ethoxylated sorbitol).

The positive results were confirmed with polysorbitans having different ethoxylation levels.

### Example 4: preparation of a suspoemulsion according to the invention

An SC (SC1) formulation was prepared having the components indicated in Table 3 by mixing the components in the amounts indicated.

**Table 3**

| **MESOTRIONE-Cu 30% SC** | **% wt** | **for 1000 g** |
|---|---|---|
| Mesotrione | 30 | 300 |
| Soprophor 4D348 | 3 | 30 |
| Acetic acid (100%) | 5 | 50 |
| Copper - (OH)2 (SIGMA) | 5 | 50 |
| AF-100 | 0.1 | 1 |
| Water | 56.9 | 569 |
| | 100 | 1000 |

Following the process described in Example 2, an EW formulation can be prepared and then mixed with the above formulation SC to provide an SE formulation having the components indicated in Table 4

**Table 4**

| | **%w/w** | **g/L** | **grams** |
|---|---|---|---|
| SC1 | 7.5 | 85 | 75 |
| S-Metholachlor | 23 | 260 | 230 |
| GLUFOSINATE AMMONIUM | 11.8 | 133 | 118 |
| ZOHARPON SLS POWDER | 1.8 | 20 | 18 |
| Agnique PG 9116 | 0.9 | 10 | 9 |
| PolyAgro A | 0.9 | 10 | 9 |
| H3PO4 85% | 1.8 | 20 | 18 |
| AF-100 | 0.4 | 5 | 4 |
| KELZAN AP-AS | 8.8 | 100 | 88 |
| WATER TAP | 43.1 | 487 | 431 |
| | 100 | 1130 | 1000 |

Alternatively, the different components of the EW formulations can be added into the SC 1 formulation of Table 3 without formally preparing an EW formulation. Specifically, all the aqueous components, including the SC, that is, all components except metholachlor, can be mixed until all dissolvable components are dissolved. Then, the organic phase (i.e. metholachlor) is added and mixed. Finally, the thickener, Kelzan, is mixed to form the SE formulation.

### Example 5: stability of a suspoemulsion according to the invention

The stability of this formulation was tested against similar formulations using different tests. In a first set of trials Zoharpon SLS was substituted with different surfactants as indicated in Table 5. The stability of the resulting formulation was tested (i) after 4 days at room temperature; (ii) after 4 freeze/thaw cycles; and (iii) after 4 days at 54°C. Based on the results of said 3 experiments the overall stability in each case was determined.

**Table 5**

| **Formulation** | **Additive** | **4 Days at RT** | **After 4 Freeze/Thaw cycles** | **4 Days at 54C** | **Overall** |
|---|---|---|---|---|---|
| 1 | 1.8% SLS | Good | Good | Good | Good |
| 2 | 1% SLS +0.8% water | Good | Good | Good | Good |
| 3 | 1.8% WATER (WITHOUT SLS) | Bad | Bad | Bad | Bad |
| 4 | 1.4% ETA 70 +0.4% water | Bad | Bad | Very Good | Bad |
| 5 | 1%+0.8% Water GEROPON T/77 | Very Good | Good | Bad | Bad |
| 6 | 1%+0.8% Water UFOXANE 3A | Good | Bad | Bad | Bad |

As shown by the results, Zoharpon SLS, Sodium Lauryl Sulfate (an unsubstituted C₁₂ alkyl sulphate according to the invention) was the only one providing an overall good result in all stability tests (Formulations 1 and 2). Geropon T/77, having a taurate structure (amide-substituted sulphonate, or ETA 70 (an ethoxylated alkyl sulphate) could not perform well in all stability tests, making formulation 3-6 unsuitable.

Further trials were made to test the effect of PolyAgro A. In the SE formulation of Example 4 PolyAgro A was substituted with other surfactants or simply removed. The stability of the resulting formulations was tested (i) after 1 day at room temperature; (ii) after 1 freeze/thaw cycle; and (iii) after 1 day at 54°C. Based on the results of said 3 experiments the overall stability in each case was determined. The results are shown below in Table 6.

**Table 6**

| **Formulation** | **Additive** | **1 Day at RT** | **After 1 Freeze / Thaw Cycle** | **1 Day at 54C** | **Overall** |
|---|---|---|---|---|---|
| 8 | 0.9% PolyAgro A | Good | Good | Good | Good |
| 9 | 1% WATER (without PolyAgro A) | Bad | NA | NA | Bad |
| 10 | 1% ATLOX 4913 | Good | Good | Bad | Bad |
| 11 | 1% TERSPERSE 2612 | Good | Good | Bad | Bad |
| 12 | 1% AGRILAN 755 | Good | Good | Bad | Bad |
| 13 | 1% ATLOX 4917 | Bad | NA | NA | Bad |
| 14 | 1% ATLOX 4919 | Bad | NA | NA | Bad |

Only the SE formulation comprising PolyAgro A provided a good stability in all tests (Formulation 8). The result is significant in the case of Atlox 4917 (modified styrene acrylic polymer) which is marketed for improved electrostatic and steric repulsion, and in the case Atlox 4919, which according to the vendor is specifically designed for high electrolyte contents.

## Claims

1. A suspoemulsion formulation comprising
(i) an aqueous phase;
(ii) a liquid organic phase emulsified in the aqueous phase, the liquid organic phase comprising at least one lipophilic active ingredient and, optionally, a lipophilic organic solvent;
(iii) at least 5 w/w%, with respect to the total weight of the final emulsion, of salts;
(iv) a thickener;
(v) a combination of surfactants comprising
- between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant;
- between 0.1 and 15 w/w%, with respect to the total weight of the final emulsion, of a second surfactant selected from
polyalcoxylated alcohols selected from the group consisting of esters of polyalkoxylated polyols, polyalkoxylated polyols, and polyalkoxylated C₄-C₃₀ aliphatic alcohols; and
aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates;
and
(vi) a solid active ingredient.

2. The suspoemulsion according to claim 1, comprising a polymeric non-ionic surfactant selected from the group of the alkyl polyglicosides.

3. The suspoemulsion according to any of the previous claims, wherein said salt comprises a hydrophilic active ingredient electrolyte.

4. The suspoemulsion according to any of the previous claims, wherein said charged monomers comprise an anionic sulphonate group.

5. The suspoemulsion according to any of the previous claims, wherein the second surfactant is selected from the group of alkyl suphates.

6. An aqueous tank mix comprising an adjuvant and the suspoemulsion defined in claim 1.

7. A method for the control of undesired plants, pests or diseases comprising contacting an effective amount of the suspoemulsion as defined in claim 1 or the tank mix as defined in claim 6 with the locus of said undesired plants, pests or diseases.

8. An oil-in-water agrochemical emulsion comprising
(i) an aqueous phase;
(ii) a liquid organic phase emulsified in the aqueous phase, the liquid organic phase comprising at least one lipophilic active ingredient and, optionally, a lipophilic organic solvent;
(iii) at least 5 w/w%, with respect to the total weight of the final emulsion, of salts;
(iv) a thickener; and
(v) a combination of surfactants comprising
- between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant; and
- between 0.1 and 15 w/w%, with respect to the total weight of the final emulsion, of a second surfactant selected from
polyalcoxylated alcohols selected from the group consisting of esters of polyalkoxylated polyols, polyalkoxylated polyols, and polyalkoxylated C₄-C₃₀ aliphatic alcohols; and
aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates.

9. The emulsion according to claim 8, wherein the sum of the concentration of the salt components (iii) is between 5 and 50 w/w% with respect to the total weight of the final emulsion.

10. The emulsion according to claim 9, wherein the concentration of the hydrophilic active ingredient electrolyte is between 5 and 50 w/w%, with respect to the total weight of the final emulsion.

11. An aqueous tank mix comprising an adjuvant and the emulsion defined in any of claims 8 to 10.

12. A process for the preparation of the emulsion that comprises
(i) emulsifying an organic phase comprising at least one lipophilic active ingredient, optionally a lipophilic organic solvent, and between 0.1 and 15 w/w%, with respect to the total weight of the final emulsion, of a second surfactant selected from
polyalcoxylated alcohols selected from the group consisting of polyalkoxylated polyols or esters thereof, and polyalkoxylated C₄-C₃₀ aliphaitic alcohols; and aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates;
into an aqueous phase comprising water and between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant, the aqueous phase optionally comprising less than 5 w/w%, with respect to the total weight of the final emulsion of salts;
(ii) optionally, mixing the previously obtained emulsion with a first amount of thickener;
(iii) mixing the emulsion obtained in the previous step with an amount of salts up to a minimum of 5 w/w%, with respect to the total weight of the final emulsion;
(iv) mixing the emulsion obtained in the previous step with a thickener.

13. The process according to claim 12 comprising
(i) emulsifying an organic phase comprising between 0.1 and 75 w/w%, with respect to the total weight of the final emulsion, of at least one lipophilic active ingredient, optionally a lipophilic organic solvent, and between 0.1 and 15 w/w%, with respect to the total weight of the final emulsion, of a second surfactant selected from
polyalcoxylated alcohols selected from the group consisting of polyalkoxylated polyols or esters thereof, and polyalkoxylated C₄-C₃₀ aliphaitic alcohols; and aliphatic or aromatic sulphates or sulphonates selected from the group consisting of alkyl sulphates, alkyl aryl sulphates, aryl alkyl sulphates, aryl sulphates, alkyl sulphonates, alkyl aryl sulphonates, aryl alkyl sulphonates and aryl sulphonates;
into an aqueous phase comprising water and between 0.1 and 15 w/w%, with respect to the total weight of the final emulsion, of a polyanionic block copolymer surfactant comprising a hydrophobic moiety and a hydrophilic moiety, wherein at least 60 w/w% of the hydrophilic moiety comprises charged monomers and wherein the weight percentage of the charged monomers is at least 35 w/w% with respect to the total weight of the polyanionic block copolymer surfactant;
(ii) optionally, mixing the previously obtained emulsion with a first amount of thickener;
(iii) mixing the emulsion obtained in the previous step with 5 w/w% or more, with respect to the total weight of the final emulsion, of a hydrophilic active ingredient electrolyte; and
(iv) mixing the emulsion obtained in the previous step with a thickener.

14. Use of an emulsion as defined in any of claims 8 to 10 for preparing a stable suspoemulsion as defined in claim 1.
